# EUROPÄISCHE PATENTSCHRIFT

(11) **EP 1 497 504 B1**
(45) Veröffentlichungstag und Bekanntmachung des Hinweises auf die Patenterteilung: **14.02.2007**
(21) Anmeldenummer: 03747118.2
(22) Anmeldetag: 24.04.2003
(51) Int. Cl.: E04B 1/19, E04B 1/58

(54) **SYSTEM, VERFAHREN UND VORRICHTUNG ZUR HERSTELLUNG EINES TRAG- ODER STABWERKS**
SYSTEM, METHOD AND DEVICE FOR PRODUCING A SUPPORTING FRAMEWORK OR RIGID GIRDER
SYSTEME, PROCEDE ET DISPOSITIF DE PRODUCTION D'UNE STRUCTURE PORTEUSE OU OSSATURE RIGIDE

(30) Priorität: 25.04.2002 DE 10218597
(43) Veröffentlichungstag der Anmeldung: 19.01.2005
(73) Patentinhaber: Heike Wallner Automation GmbH, 91126 Schwabach (DE)
(72) Erfinder: WALLNER, Ulrich, 91126 Schwabach (DE)
(74) Vertreter: Küchler, Stefan
(86) Internationale Anmeldenummer: PCT/EP2003/004264
(87) Internationale Veröffentlichungsnummer: WO 2003/091507

(56) Entgegenhaltungen:
- EP-A- 1 008 768
- WO-A-00/55442
- WO-A-99/49150
- DE-A- 3 817 236
- DE-A- 4 333 029
- GB-A- 852 155
- US-A- 2 561 435
- US-A- 2 703 724
- US-A- 3 547 275
- US-A- 4 231 834

## Beschreibung

Die Erfindung richtet sich auf ein System, ein Verfahren und eine Vorrichtung zur Herstellung eines Stab- oder Tragwerks aus miteinander verbundenen oder verbindbaren Stabelementen und zwischen diesen im Bereich all derjenigen Verbindungsstellen, wo sich zwei oder mehrere Stabelemente treffen, deren Längsachsen nicht koaxial zueinander verlaufen, angeordneten öder anordenbaren Verbindungselementen, wobei die Stabelemente aus wenigstens je einem Segment eines Werkstoffs von hochwachsenden Pflanzen und die Verbindungselemente aus einem festen, nachwachsenden Werkstoff bestehen, und wobei wenigstens ein Ende eines Stabelements, ein damit zu verbindendes Verbindungselement und/oder das Ende eines anzufügenden, weiteren Stabelements derart bearbeitet sind/werden, dass es (sie) zumindest bereichsweise entlang wohldefinierter geometrischer Körper verlaufende Oberflächen aufweist (-en).

Aus der DE-PS 43 33 029 C2 ist ein Tragwerk aus Bambusrohren bekannt, welche über Verbindungselemente miteinander verbunden sind, wobei die Verbindungselemente mindestens eine Bohrung aufweisen, in die je ein freies Ende eines unbearbeiteten Bambusrohrs eingesetzt ist, und wobei die Verbindungselemente an den freien Enden des Bambusrohrs angespritzt oder angegossen sind oder über ein Klebe- oder Vergußmittel mit den freien Enden des Bambusrohrs verbunden sind. Dabei werden Unregelmäßigkeiten des Bambusrohrs durch die Spritz-, Klebe- oder Vergußmasse ausgeglichen. Zu diesem Zweck sind die Bohrungen in den Verbindungselementen querschnittlich stark überzudimensionieren, weil die Querschnitte von Bambusrohren in weiten Grenzen schwanken können. Dies wiederum führt zu einem riesigen Bedarf an Spritz-, Klebe- oder Vergußmasse. Da zudem aufgrund des hohen Spritz-, Klebe- oder Vergußmassenvolumens neben den adhäsiven Eigenschaften dieses Werkstoffs auch dessen mechanische Eigenschaften für die Stabilität des Fachwerks von zentraler Bedeutung sind, ist ein sehr hochwertiger Werkstoff erforderlich, so dass die Gesamtkosten stark erhöht werden. Der Zusammenbau ist darüber hinaus sehr arbeitsintensiv.

Die WO 00/55442 A1 beschreibt eine Verbindungstechnik für eine Leiter, Gerüst oder Tragwerk. Dabei gibt es an dem steckerartigen Teil einen hohlen Fortsatz mit einer inneren und einer äußeren Mantelfläche. Das dazu komplementäre, buchsenartige Teil hat einen Sockel mit einer entlang einer geschlossenen Schleife verlaufenden Nut mit einander zugewandten Nutflanken. Der Fortsatz des steckerartigen Teils wird in den Sockel des buchsenartigen Teils eingesetzt und darin mittels Klebstoff fixiert.

Hierbei gibt es nur stabförmige Teile, welche in den Verbindungspunkten direkt miteinander verbunden werden. Dadurch wird einerseits das als Buchse dienende Teil geschwächt; außerdem müssen Stabelemente mit unterschiedlichen Querschnittsdurchmessern verwendet werden. All das läßt das vorbekannte System zwar für Leitern verwendbar erscheinen, nicht dagegen für größere Bauwerke, wo es auf hohe Tragkraft einerseits und auf ein Höchstmaß an Kompatibilität andererseits ankommt. Ferner sind die ineinandergreifenden Formen nicht komplementär zueinander gestaltet, sondern das Steckerteil kann eine dreieckige Geometrie haben, insbesondere aber mit Zähnen, und ist in jedem Fall derart gestaltet, dass es mit dem Buchsenteil eine spielbehaftete Verbindung ergibt. Dies bedeutet, dass riesige Mengen an Klebstoff erforderlich sind. Solches mag bei der Herstellung von Leitern noch akzeptabel sein; bei größeren Bauten, wie sie die Erfindung im Sinn hat, führt dies zu einer erheblichen Verteuerung des Projektes. Darüber hinaus sind solche Klebeverbindungen nicht von großer Dauer. Denn einerseits unterliegt ein Klebstoff einer Schwindung beim Trocknen/Abbinden, wodurch Risse entstehen können. Außerdem arbeitet Holz bei Temperatur- und/oder Feuchtigkeitsänderungen, was ein abgebundener Klebstoffblock nicht nachvollziehen kann. Solche Klebeverbindungen sind daher allenfalls aufgrund des zusätzlichen Formschlusses quer zu den eingezapften Stäben belastbar (was bei den in die Holme eingezapften Sprossen einer Leiter ausreicht), jedoch nicht in Längsrichtung derselben.

Aus den Nachteilen des beschriebenen Standes der Technik resultiert das die Erfindung initiierende Problem, ein gattungsgemäßes System zur Erstellung eines Trag- oder Stabwerks derart weiterzubilden, dass sich ein optimales Verhältnis zwischen Aufwand und Leistung ergibt, d.h., dass die Kosten und/oder der Arbeitsaufwand für die Erstellung eines Bauwerks gesenkt werden können, ohne dass darunter dessen Stabilität zu leiden hat, und das sich hinsichtlich Tragkraft und Kompatibilität der einzelnen Stabelemente und auch hinsichtlich der Kosten auch für große Bauwerke (Häuser, Brücken, etc.) eignet.

Die Lösung dieses Problems gelingt bei einem gattungsgemäßen System durch die kennzeichnenden Merkmale des Hauptanspruchs. Bevorzugte Systeme sind den diesem nachgeordneten Ansprüchen zu entnehmen.

Hochwachsende Pflanzen sind mit in Längsrichtung laufenden Fasern armiert und haben daher eine optimale Stabilität bei (Zug-) Beanspruchungen in ihrer Längsrichtung. Da andererseits mit dem erfindungsgemäßen System erstellte Bauwerke in Tragwerke mit Knotenpunkten und geraden Verbindungen zwischen diesen aufgelöst werden, ist es nicht erforderlich, dass die Stabelemente eine große Biegefestigkeit haben. Deshalb kann auf einen Faserverlauf schräg oder quer zur Längsachse des Stabelements und insbesondere auch auf radial verlaufende oder sich überkreuzende Fasern verzichtet werden. Indem für die Stabelemente nachwachsende Rohstoffe verwendet werden, so läßt sich die Verwendung teurer Chemikalien einsparen, welche obendrein aus fossilen und damit nur begrenzt zur Verfügung stehenden Materialien stammen. Darüber hinaus werden nachwachsende Rohstoffe durch Photosynthese aufgebaut, wobei der für die verschiedensten organischen Verbindungen erforderliche Kohlenstoff dem Kohlendioxid der Luft entzogen wird; somit wird dessen klimaverändernde Wirkung als Treibhausgas reduziert. Biologische Werkstoffe können auch wieder leichter entsorgt werden, ohne die Umwelt zu belasten.

Von zentraler Bedeutung ist für die erfindungsgemäße Anordnung, dass im Bereich der Verbindung eines Stabelements mit einem Verbindungs- oder einem weiteren Stabelement an jedem der beiden Körper jeweils eine zumindest bereichsweise entlang der Mantelfläche eines Zylinders, Kegels, Prismas oder einer Pyramide verlaufende Oberfläche sowie eine zumindest bereichsweise entlang eines Hohlzylinders, -kegels, -prismas und/oder einer Hohlpyramide verlaufende Oberfläche vorgesehen ist. Einerseits hat man es hierbei mit vermittels vergleichsweise einfacher Verfahren wie Fräsen oder Drehen herstellbaren Körpern zu tun. Andererseits wird das Zusammenfügen nach dem Steckprinzip mit nahe aneinanderliegenden Oberflächen ermöglicht, welche sich für eine Arretierung mittels Klemmen und/oder Leimen eignen. Durch Preßpassung ist dabei eine noch höhere Festigkeit der Verklebung erreichbar. Beispielsweise ist an einem Stabelement immer ein konvexes Hohlelement (Innenseite) innerhalb eines konkaven Vollelements (Außenseite) vorhanden, so dass sich hier leicht durch Bearbeitung der Innen- und Außenseite zwei ineinander liegende, genormte Flächen erzeugen lassen. Werden an dem Verbindungselement zwei dazu etwa komplementäre Flächen erzeugt, wobei sodann das konvexe Hohlelement außerhalb des konkaven Vollelements (Kern) liegt, so läßt sich die potentielle Klebefläche und damit die Festigkeit einer Verbindung etwa verdoppeln. Außerdem wird ein in eine Vertiefung eingesetztes Stabelement an seiner Stirnseite vollständig umgeben und daher selbst bei unterschiedlicher, bspw. durch Feuchtigkeit (Quellen) bedingter Ausdehnung stets fest an beide Klebeflächen gepreßt.

Die Erfindung empfiehlt, dass die beiden unterschiedlichen geometrischen Formen, entlang der die Oberfläche eines Körpers verläuft, konzentrisch zueinander angeordnet sind. Eine solche, besonders homogene Anordnung läßt sich einerseits auf sehr einfachem Weg herstellen und kommt bspw. der natürlichen Geometrie eines Bambusrohrs am nächsten.

Sofern die beiden unterschiedlichen, aber in irgendeiner Form symmetrischen Formen, entlang der die Oberfläche eines Körpers verläuft, konstante Abstände zueinander aufweisen, so ergibt sich eine isotrope Struktur, welche eine beliebige Verdrehung des Bambusrohrs um seine Achse erlaubt und damit einen zusätzlichen Freiheitsgrad bietet, um bei schwierigen Tragwerksknoten eine Feinjustierung zu ermöglichen.

Die Verbindung eines Stabelements mit einem Verbindungselement kann als Steckverbindung konstruiert sein, um durch einen intensiven Formschluß zusätzliche Arretierungsmittel zu entlasten. Als Arretierungsmittel kommen sowohl Klemm- als auch Klebeverbindung bspw. mittels Holzleim in Betracht. Darüber hinaus können auch - zusätzlich zu dem Formschluß der Steckverbindung - Schraubhülsen und/oder -bolzen vorgesehen sein, um in Längsrichtung der Steckverbindung wirkende Zugkräfte (teilweise) durch eine Schraubverbindung zu übertragen.

Zum Festklemmen eines Stabelements an einem Verbindungselement oder einem weiteren Stabelement läßt sich ein dort angeformter und zum Eingriff in das Stabelement ausersehener Kern aufspreizen und dadurch von innen an die Innenseite des Stabelements pressen. Um den Kern aufzuspreizen, kann in eine innere, vorzugsweise mittige Ausnehmung des aufspreizbaren Kerns ein sich kontinuierlich erweiterndes Element, bspw. von der Form eines Konus oder eines Pyramidenstumpfs, hineingedrückt oder -gezogen werden. Dieses Element transformiert dabei eine axiale Betätigungskraft in eine radiale Verformung eines aufspreizbaren Kerns. Zu diesem Zweck kann in dem Verbindungselement eine den Kern in dessen Längsrichtung durchsetzende Ausnehmung vorhanden sein, in welche der Schaft einer Schraube, eines Gewindebolzens od. dgl. einsetzbar ist. Letztere(r) wiederum leitet die Axialkraft aus einer selbsthemmenden Verdrehung gegenüber einem anderen Gewindeelement her, das dabei die beim Hineinziehen eines sich erweiternden Elements in den Kern auftretende Gegenkraft aufnimmt.

Sofern ein Verbindungselement eine ringförmige Gestalt aufweist, so können nicht nur aus beliebigen Richtungen innerhalb der Grundebene des Rings auf diesen zu laufende Stabelemente aufgenommen und sicher verankert werden. Darüber hinaus ist es möglich, die Ausnehmungen zur Aufnahme je eines schraubenförmigen Spreizelements bis zu der Innenseite des Rings zu verlängern, um dort ein Gewindeelement oder ein anderes Spannelement ansetzen zu können, das sodann zur Arretierung bequem betätigt werden kann, nachdem die betreffenden Verbindungen hergestellt worden sind. Bevorzugt laufen jedoch die Längsachsen aller angeschlossenen Stabelemente auf einen zentralen Punkt des Verbindungselements zu, so dass keinerlei Drehmomente in dem Tragwerk auftreten, welche zu Biegebeanspruchungen der Stabelemente führen könnten.

Bevorzugt hat ein Verbindungselement eine scheibenförmige Gestalt, bspw. mit einer kreisförmigen oder 3-, 4- oder 6-eckigen Grundfläche. Ein solches Verbindungselement ist besonders für ebene Tragwerke geeignet, da dort alle Verbindungen innerhalb einer Ebene liegen. Soll bspw. eine Querverstrebung zu einem dazu parallelen Flächentragwerk hergestellt werden, so empfiehlt es sich, diese Verbindungen nicht lotrecht zu einem Flächentragwerk verlaufen zu lassen. Die hierfür erforderlichen, schrägen Verankerungsstrukturen lassen sich an den vielfältigsten Stellen eines scheibenförmigen Verbindungselements, aber auch an einem daran festgelegten, weiteren Verbindungselement unterbringen. Die Stärke eines solchen scheibenförmigen Verbindungselements sollte größer sein als der (maximale) Durchmesser eines Stabelements, damit dessen Endbereich vollständig in das Verbindungselement eingebettet wird. Dadurch kann bspw. bei Verwendung von Bambus für die Stabelemente erreicht werden, daß die anfälligere Innenseite eines Bambusrohrs von außen nicht zugänglich ist.

Neben der beschriebenen, einteiligen Ausführung eines Verbindungselements könnte dieses auch zweiteilig ausgebildet sein, so dass zwei zunächst voneinander getrennte Hälften um ein durchgehendes Stabelement gelegt werden können, um dieses nach anschließendem Zusammenfügen vollständig zu umgeben und bspw. ein weiteres Stabelement an einer Stelle eines Tragwerks zu verankern, wo sich zuvor kein Knoten befand. Auf diese Weise läßt sich auch ein solches, "halbes" Verbindungselement an dem Schaft eines Stabelements festlegen, bspw. mittels Klebstoff. Zu diesem Zweck hat ein derartiges Verbindungselement eine konkave, den Schaft des betreffenden Stabelements bereichsweise umgebende Anschlußfläche. Um eine derartige Klebeverbindung herstellen zu können, sollte auch der betreffende Schaftbereich eines Stabelements an seiner Außenfläche bearbeitet, insbesondere rund gefräst sein.

Im Rahmen der Erfindung kann ein Stabelement zwischen zwei Verbindungselementen eingefügt sein oder zwischen zwei anderen Stabelementen, um dieselben in koaxialer Richtung zu verlängern. Während im ersteren Falle beide Enden des Stabelements dieselbe Steckverbindungs-Struktur aufweisen sollten (bspw. Ringzapfen - Ringzapfen), empfiehlt sich in letzterem Fall, an beiden Enden prinzipiell zueinander komplementäre Steckverbindungs-Strukturen vorzusehen (bspw. Ringzapfen - Ringnut), damit sich jeweils genormte, zueinander stets passende Stabelemente ergeben.

Für die Stabelemente schlägt die Erfindung ferner die Verwendung von Stämmen, Stengeln oder Stielen hochwachsender Pflanzen vor, die sich leicht zu langgestreckten Elementen für Tragwerke verarbeiten lassen. Neben den in Europa weit verbreiteten Dikotyledonen, insbesondere Laub- und Nadelbäumen, wobei gerade dünne Stämme mit einem Durchmesser bis zu etwa 10 oder 15 cm (sog. Schwachholz) gut geeignet sind, lassen sich auch Pflanzen aus der Gattung der Monokotyledonen (Palmen, Gräser, etc.) verwenden, da bei diesen die Leitbündel so unregelmäßig verteilt sind, dass keine Markstrahlen auftreten. Daraus resultiert, dass die Fasern nicht in einem regelmäßigen Muster nebeneinander angeordnet sind. Da die Fasern alle parallel zueinander verlaufen, würde eine Anordnung bspw. in isogonalen Reihen oder auch nur in einem einzigen Ring zu unverstärkten Bindemittelebenen führen, längs der eine Ablösung, d.h. Rißbildung erheblich erleichtert würde. Solche faserfreien Zentral- oder Markstrahlen sind daher nach Möglichkeit zu vermeiden. Erstrebenswert ist ferner eine Erhöhung der Faserdichte zum Außenumfang des Stabelements hin, wo naturgemäß im Fall einer dennoch auftretenden Biegebeanspruchung die größten Kräfte auftreten. Diesem Erfindungsgedanken folgend findet man unter der Familie der Gräser die sog. Riesengräser oder Bambusgewächse, welche den weiteren Vorteil einer Anhäufung von Leitbündeln oder -fasern an dem Außenumfang mit sich bringen und damit trotz in Längsrichtung verlaufender Fasern eine hohe Biegefestigkeit haben. Zwar sind die Stämme oder Stengel von Bambusgewächsen in Längsrichtung unterteilt in Nodien (Knotenebenen) und Internodien (rohrförmige Bereiche). Die Vernetzung der Fasern in den Nodien soll beim lebenden Bambus die Elastizität erhöhen; beim geernteten und trocknenden Bambus können diese allerdings auch Spannungen hervorrufen, weshalb sie ausgebohrt werden sollten. Eine übermäßige Beeinträchtigung der Stabilität eines derartigen Bambusrohrs ist dadurch nicht zu befürchten. Da die Internodien-Segmente einen äußerst homogenen Aufbau haben und die Nodien als Wachstumszentren nur dünne Ebenen darstellen, werden die Eigenschaften der Rohre durch die Eigenschaften der Segmente, d.h. der Internodien dominiert. Lediglich die Zugfestigkeit ist in den Nodien herabgesetzt, nicht jedoch Druck-, Scher- und Biegefestigkeit, so dass die Stabilität eines überwiegend auf Druck beanspruchten Tragwerks darunter nicht leidet.

Manche Bambusgewächse gedeihen innerhalb von einem Jahr auf eine Höhe von bis zu 30 Metern, während in den folgenden Jahren ausschließlich eine Verholzung ohne zusätzliches Wachstum erfolgt. Bei den hochwachsenden Bambusgewächsen liegt der Stammdurchmesser zwischen 5 und 20 Zentimetern, und die Stärke der Rohrwand liegt etwa zwischen 0,5 und 8,0 Zentimetern. Bambus hat mit Ausnahme der regelmäßig anzutreffenden Nodien keine Fehlstellen, wie sie bei Dikotyledonen bspw. in Form von Astansätzen (sog. Astlöcher) anzutreffen sind und dort die Stabilität zusätzlich beeinträchtigen. Aufgrund seiner hohen mechanischen Stabilität kann ein Bambusrohr in Längsrichtung große Druck- und/oder Zugkräfte aufnehmen, die im Bereich der Internodien mit denen von Stahl vergleichbar sind. Die Biegebeanspruchung ist erst durch eine Neigung zur Bildung von Knicken bei starken Biegekräften beschränkt. Obwohl Bambusgewächse etwas gerader wachsen als die meisten Baumsorten, sind fast immer unübersehbare Krümmungen vorhanden sowie erhebliche Unregelmäßigkeiten hinsichtlich des Rohrquerschnittes. Aus diesem Grund wurden Bambusrohre bislang stets mit Schnüren, Fasern od. dgl. zusammengebunden, was andererseits für die Herstellung eines Trag- oder Stabwerks völlig unzureichend ist, da hierbei keine Kräfte in Längsrichtung eines beteiligten Bambusrohrs übertragen werden können.

Da die Außenseite des Stamms von einer harten, wasserabweisenden und äußerst beständigen Schicht bedeckt ist, in der Silikate eingelagert sind, während die Innenseite einen wachsartigen Überzug trägt, sind diese Bereiche für viele Klebstoffe nicht benetzend und würden daher die Haltbarkeit einer Leimverbindung beeinträchtigen. Da diese Schichten darüber hinaus relativ glatt sind, ist auch der erzielbare Reibschluß vergleichsweise gering, so dass die Erfindung empfiehlt, diese Schichten abzutragen, jedoch nur an einem der Atmosphäre möglichst nicht ausgesetzten Bereich, damit an den vor Feuchtigkeit nicht mehr geschützten Bereichen kein Wasser eindringen kann.

Die Form der Stabelemente selbst kann mannigfach sein. Entsprechend dem gewählten Werkstoff kann einer stabförmigen Struktur, d.h., mit einem massiven Kern, wie sich dies bspw. bei Laub- oder Nadelhölzern ergibt, der Vorzug gegeben werden, oder einer rohrförmigen Struktur, die sich bei Verwendung von Bambusrohren anbietet. Das Hohlbohren von Vollholzstäben hat darüber hinaus den Vorteil einer gleichmäßigen Trocknung über den Querschnitt mit daraus folgendem, gleichmäßigen und daher rißfreien Schwinden.

Ein weiterer Gesichtspunkt ist, dass Bambusrohr ein biologischer Werkstoff ist, der unter dem Einfluß seiner Umgebungsbedingungen "arbeitet" und daher bspw. beim Einsetzen eines in sich starren Endstücks bspw. aus Metall oder Kunststoff im Lauf der Zeit zu Rißbildungen neigt. Dies wiederum hätte fatale Folgen, weil sodann die wasserabweisende Oberfläche unterbrochen würde und daraufhin Wasser eindringen und Fäulnis od. dgl. auslösen könnte. Aus diesem Grund bevorzugt die Erfindung die Verwendung von Verbindungselementen aus einem vergleichbaren biologischen Werkstoff wie bspw. Dikotyledonen, insbesondere Laub- oder Nadelholz. Diese zeigen ähnliche Reaktionen auf veränderte Umweltbedingungen wie Monokotyledonen und können mit diesen sozusagen "mitarbeiten", so dass die inneren Materialspannungen vergleichsweise gering bleiben. Um dies zu gewährleisten, müssen allerdings jegliche Zwischenstücke zwischen den Monokotyledonrohren und den Verbindungselementen nach Möglichkeit vermieden werden. Die Erfindung sieht daher eine direkte Verbindung vor, entweder als Steck-, Klemm- und/oder Klebeverbindung. Eine derartige, mit vertretbarem Aufwand industriell einsetzbare Verbindungstechnik bedingt andererseits jedoch genormte Berührungsflächen, welche ein natürlich gewachsenes Riesengras nicht zu bieten hat. Hier schafft die Erfindung Abhilfe, indem zunächst die unregelmäßigen Enden eines zu verwendenden Bambusrohrs derart bearbeitet werden, dass entlang wohldefinierter geometrischer Körper verlaufende Oberflächen entstehen. Dieser Arbeitsgang kann mit dem oben beschriebenen Abtragen der oberflächlichen Schichten im Bereich der Anschlußstellen integriert werden.

Wie oben bereits erwähnt, kann zwecks einer möglichst optimalen Verträglichkeit eines Verbindungselements mit einem Stabelement ersteres aus Holz bestehen.

Holz und Bambus sind zwar beides organische Werkstoffe, haben aber grundsätzlich Unterschiede. Deshalb kann bei Bedarf stattdessen auch zu Plattenwerkstoffen schichtverleimtes Bambusmaterial verwendet werden, so dass sich identische Stoffeigenschaften mit den Bambusrohren ergeben.

Da ein Verbindungselement bspw. durch eine abdichtende Verleimung luftdicht mit einem rohrförmigen Stabelement, bspw. aus Bambusrohr, verbunden ist und intern miteinander verbundene Kanäle aufweist, die zu den Hohlräumen der angeschlossenen, rohrförmigen Stabelemente führen, wobei im Falle von Bambusrohren deren Knoten durchbohrt sind, so entsteht innerhalb eines solchermaßen erstellten Trag- oder Stabwerks ein geschlossener Hohlraum mit einem gezielt beeinflußbaren Subklima. Dieses Subklima kann auf den vielfältigsten Wegen beeinflußt werden, um das Verhalten des Tragwerks zu steuern und/oder zu überwachen, oder um potentiell zerstörerische Einflüsse wie Schädlingsbefall von innen, Feuer od. dgl. von dem Tragwerk fernzuhalten. Hierfür hat es sich als zweckdienlich erwiesen, wenn wenigstens ein Verbindungselement und/oder rohrförmiges Stabelement einen Anschluß aufweist, an welchem dem Hohlraum des Systems Gase, Schäume und/oder Flüssigkeiten zuführbar sind, bspw. feuchte oder trockene Luft, um durch ein geregeltes Klima den Bambus geschmeidig zu halten, Giftstoffe sowie Heiß- Kalt- oder Druckluft als Schädlingsbekämpfungsmittel, Löschmittel wie bspw. Stickstoff, Schäume oder Wasser od. dgl.

Zur Lösung der gestellten Aufgabe erfährt ein gattungsgemäßes Herstellungsverfahren eine Ausprägung gemäß dem kennzeichnenden Teil des nebengeordneten Verfahrensanspruchs. In den diesem nachgeordneten Ansprüchen finden sich weitere, bevorzugte Merkmale des erfindungsgemäßen Verfahrens.

Die bei natürlich gewachsenen Werkstoffen, bspw. Hölzern oder Bambusrohren, zunächst nicht erfüllte Eigenschaft genormter Oberflächenbereiche ist für deren Verarbeitung im Rahmen eines Tragwerks unabdingbar, damit die Einzelteile exakt zusammenpassen und in der gewünschten Weise zusammensteckbar sind. Ferner ist es von großem Vorteil, wenn auch die Ausrichtung der genormten Endbereiche relativ zueinander exakt vorgegeben wird. Besonders günstige Verhältnisse ergeben sich, wenn die Endbereiche derart bearbeitet werden, dass die ihre Oberflächen zumindest bereichsweise definierenden, geometrischen Körper jeweils eine Symmetrieachse aufweisen, welche sich in gegenseitiger Relation ausrichten läßt, bspw. in einer gemeinsamen Flucht. Erst dadurch wird es möglich, vorgegebene Neigungswinkel von Stabelementen präzise einzuhalten, um diese an vorgegebenen Tragwerksknoten zu vereinigen. Diese Voraussetzungen erlauben die vorlagengetreue Erstellung von hinsichtlich ihrer Statik vorausberechneten Tragwerken, was um so wichtiger ist, je größer ein Bauwerk ist. Andererseits wird dadurch bspw. die Möglichkeit der Verwendung von (Holz-) Stäben und/oder (Bambus-) Rohren variabler Länge nicht beeinträchtigt, da die Bearbeitung der Enden auf der Baustelle vorgenommen werden kann, nachdem ein (ggf. rohrförmiges) Stabelement auf die gewünschte Länge gekürzt worden ist. Ferner muß an einem Verbindungselement wenigstens eine Mantelfläche erzeugt werden, die ein Zusammenstecken mit einer Mantelfläche des Endes eines Stabelements erlaubt. Der Durchmesser dieser Mantelfläche und damit die Auswahl des für deren Erzeugung erforderlichen Werkzeugs richtet sich ggf. nach der Einklassifizierung des betreffenden Holzstab- oder Bambusrohrendes. Da diese zumeist erst unmittelbar vor dem Einbau des betreffenden Stabelements festliegt, wird die dafür geeignete Anschlußstruktur erst vor Ort in das betreffende Verbindungselement eingearbeitet.

Vorzugsweise werden die Körper und/oder Oberflächen der miteinander zu verbindenden Teile abtragend, insbesondere spanabhebend bearbeitet. Diese Technik ist für die bevorzugten Werkstoffe Bambus und Holz gleichermaßen geeignet. Die hierzu benötigten Werkzeuge sind handlich und können daher bequem auf einer Baustelle mitgeführt werden. Dadurch ist die Be- oder Nacharbeitung von bereits verbauten Verbindungselementen bspw. mittels Handbohr- oder - fräsmaschinen möglich. Stabelemente wie Holzstäbe oder Bambusrohre werden vor ihrem Einbau, aber nach geeignetem Ablängen bearbeitet. Dafür ist eine Spanneinrichtung erforderlich.

Um bei Verbindungselementen (aber auch bei direkt anzufügenden Stabelementen), die für (lösbare) Klemmverbindungen ausersehen sind, (Bereichen) einer Mantelfläche einer Anschlußstruktur, insbesondere eines Kerns, eine radiale Federbewegung zu ermöglichen, können in an diese Mantelfläche angrenzenden Bereichen zur Längsachse der betreffenden Steckverbindung vorzugsweise parallele Schlitze eingebracht werden. Diese Schlitze können ebenfalls bereits in einer Fabrik vorgesehen werden. Da bei der (nachträglichen) Einarbeitung einer ringförmigen Vertiefung als Anschlußstruktur ein Teil des Verbindungselements ohnehin entfernt wird, ist eine exakte Radialerstreckung der Schlitze nicht erforderlich; diese müssen lediglich so bemessen sein, dass sie stets an die betreffende Mantelfläche heranreichen.

Vor der Montage eines Stabelements muß bei einer solchen Klemmverbindung zunächst in einer zu deren Längsachse parallelen oder koaxialen Bohrung des Verbindungselements ein Spreizelement eingesetzt werden, das nach dem Zusammenfügen verwendet werden kann, um (Bereichen) der betreffenden Mantelfläche einen (radialen) Druck in Richtung auf eine endseitige Mantelfläche eines anzuschließenden Stabelements zu erteilen.

Daraufhin werden die Stabelemente mit dem betreffenden Verbindungs- oder Stabelement zusammengesteckt und aneinander festgeklemmt oder festgeklebt. Naturgemäß laufen diese Arbeitsschritte teilweise parallel, da nahezu jedes Knotenverbindungselement sich einerseits auf Stabelementen abstützt, andererseits weitere Stabelemente trägt, so dass einzelne Verbindungen früher, andere später entstehen.

Entlang der Längskanten eines Trag- oder Stabwerks werden Verbindungselemente als Endstücke verwendet, die mit einem Fundament, einer Decke, einem Dach od. dgl. verbindbar sind. Bei diesen ist eine vorzugsweise ebene Basisfläche mit einer Verankerungsmöglichkeit, bspw. einer oder mehreren Bohrung(en) zum Hindurchstecken von Befestigungsschrauben, vorhanden.

An den Verbindungselementen des Trag- oder Stabwerks kann eine Verkleidung od. dgl. befestigt werden, um ein mauerartiges Gebilde zu erhalten, wie es bspw. bei dem Bau von Häusern benötigt wird. Indem eine entsprechende Verankerung ausschließlich an den Verbindungselementen, nicht dagegen an den Stabelementen selbst erfolgt, bleiben letztere unverletzt und erhalten damit die ggf. wasserabweisenden Eigenschaften ihrer Außenoberfläche, und ein in dem Tragwerk enthaltener Hohlraum bleibt dicht. Müssen vergleichsweise filigrane Beplankungen an dem Tragwerk festgelegt werden, bspw. Gipskartonplatten, so können entweder die Abstände der Tragwerksknoten verringert werden, oder es wird an denselben zunächst eine Unterlattung befestigt, an der die betreffende Beplankung sodann in kurzen Abständen fixiert werden kann.

An den Endbereichen eines rohrförmigen Stabelements, insbesondere eines Bambusrohrs, kann die innere und/oder die äußere Mantelfläche bearbeitet werden. Für kleinere Tragwerke mag die Bearbeitung je einer Mantelfläche, bspw. der äußeren, genügen, während bei hochbelastbaren Tragwerken an jedem Ende eines Bambusrohrs jeweils beide Mantelflächen bearbeitet werden sollten, um durch eine Vergrößerung der potentiellen Klebefläche und durch einen zusätzlichen Formschluß in beiden radialen Richtungen (innen und außen) die Stabilität jeder Einzelverbindung zu optimieren.

Dabei ist zu berücksichtigen, dass bei Hölzern oder Bambusrohren der Radius schwankt, bei Bambusrohren oder hohlgebohreten Hölzern darüber hinaus auch die Wandstärke. Bspw. nehmen bei einem 30 m hohen Bambusrohr der Außendurchmesser, insbesondere aber auch die Wandstärke von unten nach oben ab. Aufgrund dieser Wandstärkereduzierung können zumeist nur die untersten 10 m eines Bambusrohrs für den erfindungsgemäßen Zweck verwendet werden. Wird dieser Abschnitt bspw. in Einzelteile mit einer Länge von jeweils 1,5 m zersägt, so hat dennoch jedes kurze Bambusrohr unterschiedliche Wandstärken und ggf. auch unterschiedliche Außendurchmesser. Diese Abweichungen können von Fall zu Fall so erheblich sein, dass der Außendurchmesser eines abgelängten Bambusrohrstücks kleiner ist als der Innendurchmesser eines anderen Bambusrohrstücks. Eine gemeinsame Bearbeitung mit identischen Werkzeugen kommt daher nicht in Betracht. Die Erfindung sieht zu diesem Zweck vor, unterschiedliche Klassen für (die Enden von) Bambusrohrstücke zu schaffen hinsichtlich ihrer Wandstärke und/oder im Hinblick auf Innen- und Außendurchmesser oder -umfang. Dabei läßt sich der (minimale) Innendurchmesser wie auch der (maximale) Außendurchmesser leicht mit je einer Lehre bestimmen. Solche Lehren können etwa die Gestalt eines Zylinders oder eines flachen Rechtecks haben (für innen) oder die Gestalt eines Hohlzylinders oder einer Gabel (für außen). Natürlich können diese Größen auch anderweitig gemessen werden. Jedes Bambusrohr(ende) wird auf diesem Weg in ein mehr oder weniger feines Klassifizierungssystem eingestuft, und danach bestimmt sich die Auswahl des/der weiteren Bearbeitungswerkzeugs (-e). Dabei empfiehlt die Erfindung, dass die Mantelfläche(n) eines Bambusrohr-Endes derart bearbeitet werden, dass die Wandstärke des Bambusrohrs gleich oder kleiner ist als eine (anhand des Klassifizierungssystems) vorbestimmte Wandstärke.

Vor dem Einbau eines Bambusrohrs sollten evtl. vorhandene Knotenebenen durchgebohrt oder anderweitig durchgängig gemacht werden, um innerhalb des fertigen Tragwerks einen Hohlraum zu schaffen, der für die verschiedensten Zwecke nutzbar ist. Um eine Hohlraumverbindung der an ein Verbindungselement angeschlossenen Bambusrohre zu erreichen, müssen in den von einer Stirnseite eines angebauten Bambusrohrs überdeckten Oberflächenbereichen des Verbindungselements mündende Bohrungen eingebracht werden, die sich innerhalb des Verbindungselements treffen. Andererseits läßt sich der gesamte Hohlraum eines Tragwerks durch gezielten Einsatz spezieller Verbindungselemente ohne solche durchgehende Kanäle bei Bedarf in mehrere Abschnitte unterteilen, die sodann unabhängig voneinander beeinflußt werden können. Das Ausbohren verfolgt außerdem den Zweck, ein gleichmäßiges Schrumpfen des Bambusrohres während der Trocknung nach der Ernte zu gewährleisten und somit Spannungen in dem Bambus und damit Risse zu vermeiden.

Andererseits ist der Durchmesser von internen Hohlraumverbindungskanälen völlig unabhängig von dem Durchmesser eines anzuschließenden Holzes oder Bambusrohrs. Sofern anhand der fertigen Konstruktionsunterlagen bekannt ist, unter welchem Neigungswinkel rohrförmige Stabelemente, bspw. Bambusrohre, auf ein Verbindungselement treffen, können daher erforderliche Verbindungskanäle bereits bei Herstellung der Verbindungselemente und somit vor deren Einbau erstellt worden sein. Zu diesem Zweck kann der Verbindungskörper-Rohling exakt eingespannt werden, so dass sich die von unterschiedlichen Seiten eingebrachten Bohrungen auch tatsächlich in der Mitte treffen. Bevorzugt wird hierbei ein ggf. mobiles Bearbeitungszentrum mit Führungen aus Aluminiumprofilen und mehrachsigen Servoantrieben verwendet, das nach Vorgabe einer Planungssoftware arbeitet. Derartige Hohlraumverbindungs-Bohrungen können sodann bei der Erzeugung der betreffenden Mantelfläche(n) zum Anschluß je eines Stabelements auf einer Baustelle als Werkzeugführung verwendet werden. Bei Verbindungselementen ohne Hohlraumverbindungskanäle können auch eigens für die Werkzeugführung fabrikseitig entsprechende Bohrungen vorgesehen werden.

Sofern an wenigstens einem rohrförmigen Stabelement, insbesondere Bambusrohr, und/oder vorzugsweise an wenigstens einem Verbindungselement ein Zugang zu dem Hohlraum innerhalb der rohrförmigen Stabelemente und Verbindungselemente vorgesehen wird, so lassen sich bei Bedarf verschiedene Medien in diesen Hohlraum einleiten. Um dabei einem ggf. in dem Hohlraum bereits enthaltenen Medium, bspw. Luft, ein Entweichen zu ermöglichen, empfiehlt es sich, stets wenigstens zwei derartige Zugangsanschlüsse an einem in sich geschlossenen Hohlraum vorzusehen. Diese sollten an entfernten Punkten angeordnet werden, um definierte Strömungsverhältnisse zu schaffen. Dabei hat es sich bewährt, einen derartigen Zugang an der tiefsten Stelle und ggf. einen anderen Zugang an der höchsten Stelle eines Tragwerkabschnitts anzuordnen, so dass einerseits Flüssigkeiten, andererseits auch Gase jeweils vollständig wieder aus dem Hohlraum entfernt werden können.

Eine Vorrichtung zur Durchführung des erfindungsgemäßen Verfahrens zeichnet sich aus durch die kennzeichnenden Merkmale des nebengeordneten Vorrichtungsanspruchs.

Die Verwendung einer derartigen Vorrichtung vereinfacht die Erstellung eines erfindungsgemäßen Tragwerks insofern, als eine zeitraubende, manuelle Einzelbehandlung bzw. Nachbearbeitung der verschiedenen Tragwerksknotenstellen dadurch entfallen kann, weil zueinander kompatible Oberflächenbereiche entstehen. Indem eine erfindungsgemäße Bearbeitungsvorrichtung als Abtragungswerkzeug, insbesondere als Schneidwerkzeug ausgebildet ist, kann sie dank eines geringen Platzbedarfs mobil ausgebildet sein und dadurch problemlos zu einer Baustelle transportiert werden.

Eine Vorrichtung zur Bearbeitung der Enden eines Stabelements zeichnet sich aus durch eine Einrichtung zum Einspannen eines Stabelements derart, daß dessen beide Enden möglichst konzentrisch zu einer Längsachse der Bearbeitungsvorrichtung ausgerichtet sind. Dadurch finden die eigentlichen Bearbeitungswerkzeuge ein zu bearbeitendes Stabelement stets an ein und derselben, vorgegebenen Position vor, so dass sie gegenüber einem Maschinenchassis definiert justiert sein können. Dabei sitzt im allgemeinen an jedem Ende der Spannvorrichtung eine Halterung und/oder Befestigungsvorrichtung für je ein Bearbeitungswerkzeug. Eine solche kann bspw. als ein Schlitten ausgebildet sein, der durch eine Führung in der Vorschubrichtung entlang der Längsachse der Bearbeitungsvorrichtung definiert verfahrbar ist und andererseits die eigentliche Halterung und/oder Befestigung für das Bearbeitungswerkzeug und/oder dessen Antriebsmotor trägt.

Zur Bearbeitung der endseitigen Mantelflächenbereiche dient ein Schneidwerkzeug bspw. in Form eines Fräskopfs, das zur gleichzeitigen Bearbeitung der Innen- und Außenmantelfläche des Endes eines Stabelements, insbesondere eines Bambusrohrs ausgebildet ist und zu diesem Zweck über zwei getrennte Bearbeitungs-, insbesondere Schneidbereiche verfügt. Die eigentlichen Schneidbereiche können lösbar und damit austauschbar an einem Werkzeuggrundkörper fixiert oder diesem gegenüber verstellbar sein, damit ggf. eine Anpassung an unterschiedlich einklassifizierte Bambusrohrenden erfolgen kann.

Eine bevorzugte Vorrichtung zur Bearbeitung eines Verbindungselements zeichnet sich aus durch ein um eine Achse rotierendes Werkzeug mit wenigstens einem Schneidbereich zur Erzeugung einer rotationssymmetrischen Vertiefung mit definiertem Querschnitt. Das Werkzeug kann bevorzugt in eine Handbohrmaschine od. dgl. einspannbar ausgebildet sein, um damit auch an bereits in ein Tragwerk eingebauten Knotenverbindungselementen eingesetzt zu werden. Bei einer anderen Ausführungsform kann das Stabelement, insbesondere Bambusrohr rotieren und das Werkzeug derart festgelegt sein, dass es nur Vorschub- und Zustellbewegungen ausführt entsprechend der Funktion einer klassischen Drehmaschine.

Gemäß einem weiteren Erfindungsaspekt ist der Schneidbereich an einem peripheren Mantelbereich des Werkzeuggrundkörpers angeordnet, der eine zentrale Führungsvorrichtung, bspw. einen nach vorne ragenden Zapfen, umgebend angeordnet ist. Mittels einer derartigen Führungsvorrichtung kann das Werkzeug an einer vorgebohrten, bspw. zylindrischen Führungsvertiefung zentriert werden, um dadurch sicherzustellen, dass das einzusetzende Stabelement exakt einen vorgegebenen Neigungswinkel einnimmt und dadurch mit seinem gegenüberliegenden Ende präzise in das dortige Knotenverbindungselement einsteckbar ist.

Schließlich entspricht es der Lehre der Erfindung, dass die zentrale Führungsvorrichtung als Bohrer ausgebildet ist, so dass die Führungsbohrung und die Einsteckvertiefung in einem Arbeitsgang herstellbar sind. Diese Variante ist vor allem für nicht vorausberechnete Tragwerkknoten gedacht, an deren Verbindungselementen fabrikseitig keine Führungsbohrungen eingearbeitet sein können. In diesen Fällen kann ein Monteur die Richtung der ein Stabelement aufnehmenden Einsteckstruktur selbst bestimmen; er muß dabei allerdings sehr sorgfältig arbeiten, um einerseits ggf. einen mittigen Hohlraumkanal zu treffen und andererseits für das einzusteckende Stabelement exakt die richtige Orientierung vorzugeben.

Weitere Merkmale, Einzelheiten, Vorteile und Wirkungen auf der Basis der Erfindung ergeben sich anhand der folgenden Beschreibung bevorzugter Ausführungsformen der Erfindung sowie anhand der Zeichnung. Hierbei zeigt:
- Fig. 1: eine perspektivische Ansicht eines ersten Verbindungselements eines erfindungsgemäßen Tragwerksystems;
- Fig. 2: eine abgewandelte Ausführungsform eines Verbindungselements in einer der Fig. 1 entsprechenden Darstellung;
- Fig. 3: einen Schnitt durch zwei aneinander festgelegte Verbindungselemente nach Fig. 2;
- Fig. 4: eine Modifikation des Verbindungselements aus Fig. 2 in einer perspektivischen Ansicht;
- Fig. 5: eine Sprengdarstellung einer zusammensteckbaren Verbindung mit dem Verbindungselement aus Fig. 4 sowie mit einem teilweise geschnittenen und abgebrochenen Bambusrohr;
- Fig. 6: die Anordnung aus Fig. 5 nach dem Zusammenfügen der Verbindung;
- Fig. 7: eine andere Ausführungsform einer Erfindung;
- Fig. 8: ein bspw. als Basiselement verwendbares Verbindungselement in einer perspektivischen Darstellung;
- Fig. 9: eine Seitenansicht auf ein mit dem erfindungsgemäßen System aufgebautes, ebenes Stabwerk;
- Fig. 10: ein Verbindungselement des Stabwerks aus Fig. 9 in abgebrochener und teilweise geschnittener Darstellung, zusammen mit einem an einer Umfangsseite angesetzten Werkzeug zwecks Einarbeitung einer Vertiefung für die Aufnahme eines Bambusrohrs;
- Fig. 11: einen Längsschnitt durch das Werkzeug aus Fig. 10;
- Fig. 12: eine abgebrochene Seitenansicht auf eine Vorrichtung zum Einspannen und Bearbeiten der Enden eines Bambusrohrs;
- Fig. 13: eine perspektivische Ansicht einer Spanneinrichtung der Vorrichtung aus Fig. 12;
- Fig. 14: eine Vorderansicht in Richtung des Pfeils XIV auf das Werkzeug der Vorrichtung aus Fig. 12; sowie
- Fig. 15: einen Schnitt durch zwei koaxial zusammengefügte Stabelemente.

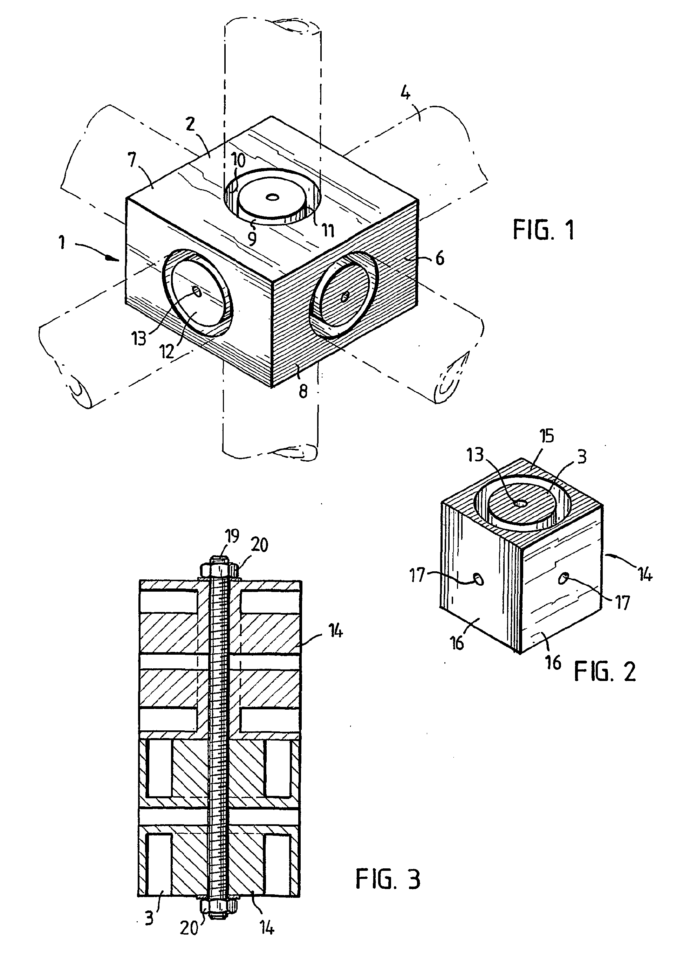

Die perspektivische Darstellung eines Verbindungselements 1 in Fig. 1 soll das erfindungsgemäße Grundprinzip veranschaulichen: Ein willkürlich oder beliebig geformtes Verbindungselement 1 weist an seiner Oberfläche 2 ein oder mehrere, dreidimensionale Strukturen 3 zum Anschluss je eines Bambusrohres 4 auf. Durch Zusammenführen mehrerer Bambusrohre 4 an einem derartigen Verbindungselement 1 wird letzteres zu einem Knoten in einem Trag- oder Stabwerk 5.

Das Verbindungselement 1 aus Figur 1 hat die Grundform eines Quaders mit vier gleich großen Umfangsseiten 6 und je einer quadratischen Ober- und Unterseite 7. Das quaderförmige Verbindungselement 1 besteht aus vielen aufeinander geleimten Sperrholzschichten 8 mit sich jeweils kreuzendem Maserungsverlauf. Da diese verleimten Sperrholzschichten 8 parallel zu der quadratischen Ober- oder Unterseite 7 verlaufen, hat das Verbindungselement 1 in parallel zu diesen Ebenen verlaufenden Richtungen jeweils eine hohe Zugfestigkeit.

An allen sechs Seiten 6, 7 des Verbindungselements 1 ist je eine Struktur 3 zum Anschluß je eines Bambusrohres 4 angeordnet, so dass an einem derartigen Stabwerksknoten sechs Bambusrohre 4 zusammengeführt werden können, von denen jeweils zwei miteinander fluchten und auf der von den übrigen vier Bambusrohren 4 aufgespannten Ebene senkrecht stehen. Damit ist ein dreidimensionales Tragwerk realisierbar.

Wie man Fig. 1 weiter entnehmen kann, hat jede Struktur 3 zum Anschluß eines Bambusrohres 4 etwa die Gestalt einer kreisringförmigen Einsenkung 9 mit zwei zueinander konzentrischen, zylindermantelförmigen Begrenzungsflächen 10, 11. Der Außendurchmesser dieser Einsenkung 9 entspricht etwa dem Außendurchmesser des betreffenden Bambusrohrs 4, und der gleichbleibende Abstand der zylindermantelförmigen Begrenzungsflächen 10, 11 entspricht etwa der genormten Maximalstärke des Endbereiches eines in diese Vertiefung einsetzbaren Bambusrohres 4.

Bei der Ausführungsform gemäß Fig. 1 werden die Enden der Bambusrohre 4 in die ringförmigen Einsenkungen des Verbindungselements 1 eingeklebt, so dass sich eine steife und unlösbare Verbindung ergibt. Wie Fig. 1 weiter erkennen lässt, verbleibt innerhalb jeder ringförmigen Einsenkung 9 ein zylindrischer Kern 12, der dabei mit der Innenseite eines Bambusrohres 4 adhäsiv verbunden wird und dieses Bambusrohr 4 dadurch zusätzlich fixiert und stabilisiert. Da Holz vergleichbare Temperaturkoeffizienten und feuchtigkeitsbedingte Quellerscheinungen zeigt wie Bambus, ist dadurch einer Rißbildung wirkungsvoll begegnet.

Ferner ist jeder der zylindrischen Kerne 12 in seiner Längsrichtung von einer Bohrung 13 durchsetzt. Alle diese Bohrungen 13 treffen sich innerhalb des Verbindungselements 1 und schaffen dadurch ein System von Verbindungskanälen zwischen den Hohlräumen aller angeschlossenen Bambusrohre 4.

Sofern - wie die Erfindung weiterhin vorsieht - alle Knotenebenen der Bambusrohre 4 durchbohrt sind, stehen diese Hohlräume wiederum in Verbindung mit den jenseits der Bambusrohre 4 befindlichen Verbindungselementen 1 und auf diesem Weg auch mit sämtlichen anderen Hohlräumen eines solchermaßen hergestellten Trag- oder Stabwerkes 5. Da andererseits die Hohlräume innerhalb der Bambusrohre 4 durch ihre luftdichte Außenoberfläche hermetisch abgeschlossen sind, herrscht in dem zusammenhängenden Hohlraum eines erfindungsgemäßen Trag- oder Stabwerkes 5 ein gezielt beeinflußbares Subklima.

Bspw. können durch diesen Hohlraum Giftstoffe, Heiß- oder Kaltluft oder sonstige Schädlingsbekämpfungsmittel geleitet werden, um einen Schädlingsbefall eines derartigen Trag- oder Stabwerkes 5 zu vermeiden, ohne dass das dabei verwendete Schädlingsbekämpfungsmittel jemals mit der äußeren Umgebung in Kontakt tritt. Das erfindungsgemäße System erzielt damit den Vorteil, dass die Wirkstoffe unabhängig von ihrer Beschaffenheit stets in kleinsten Mengen hochwirksam sind, ohne jemals die Umgebung zu beeinträchtigen. Zu einem ähnlichen Zweck könnten starke zeitliche Druckschwankungen erzeugt werden.

Ferner kann dieser Hohlraum mit einem unbrennbaren Gas, bspw. Stickstoff, unter Überdruck gefüllt sein, so dass in einem Brandfall an dem Brandherd in erheblichem Umfang Stickstoff freigesetzt wird, um den Brand zu ersticken. Gleichzeitig kann der dadurch verursachte, plötzliche Druckabfall gemessen werden, um daraus auf einen Brand zu schließen und durch Einleiten von Wasser Vorkehrungen gegen eine weitere Ausbreitung des Brandes treffen zu können. Sobald der Brand gelöscht ist, kann das Wasser wieder abgeleitet werden, und durch anschließendes Durchleiten von heißer Luft kann der innere Hohlraum des Trag- oder Stabwerkes 5 wieder getrocknet werden.

Das Verbindungselement 14 aus Fig. 2 hat eine würfelförmige Gestalt und ist insofern modifiziert, als dort nur an der Ober- und Unterseite 15 jeweils eine Struktur 3 zum Anschluß eines Bambusrohrs 4 vorgesehen ist, während an den Umfangsseiten 16 nur jeweils zentrale, das Verbindungselement 14 durchsetzende Bohrungen 17 vorgesehen sind. Auch dieses Verbindungselement 14 besteht aus miteinander verleimten Sperrholzschichten 18, welche lotrecht zu der Ober- oder Unterseite 15 verlaufen.

Das Verbindungselement 14 dient vor allem der Verlängerung von Bambusrohren 4. Um damit auch Stabwerkknoten zu realisieren, werden zwei oder mehrere, derartige Verbindungselemente 14 wie in Fig. 3 dargestellt aneinander festgelegt. Zu diesem Zweck werden die Verbindungselemente in der gewünschten Ausrichtung aneinandergelegt, derart, dass jeweils eine ihrer Bohrungen 17 miteinander fluchtet. Durch diese Flucht wird sodann eine Schraube oder ein Gewindebolzen 19 gesteckt und an beiden Seiten mit einem Gewindeelement 20 gekontert, so dass die Verbindungselemente 14 aneinander festgelegt sind.

Nun können in der gewünschten Weise Bambusrohre 4 in die zugänglichen Anschlußstrukturen 3 eingeführt und verleimt werden. Diese Anordnung hat die weitere Besonderheit, dass an einem derartigen Stabwerkknoten eine Drehbewegung zur Anpassung an schief zueinander verlaufende Stabwerkstrukturen möglich ist.

Bei dem Verbindungselement 1 sind die an der ober- und unterseitigen Struktur 3 eingeleimten Bambusrohre 4 nur mit jeweils einem Teil der Sperrholzschichten 8 verleimt, so dass unter Einwirkung hoher Zugkräfte bspw. der betreffende Kern 12 und damit das ganze Bambusrohr 4 herausgerissen werden könnte. Dies kann vermieden werden, indem bei Bedarf an der Ober- und/oder Unterseite 7 eines Verbindungselements 1 (je) ein Verbindungselement 14 festgelegt wird, bspw. mit einem hindurchgesteckten und gekonterten Gewindebolzen 19. Dabei lassen sich die Verbindungselemente 14 so ausrichten, dass ihre schichtverleimten Sperrholzplatten 8 lotrecht zu der Ober- und Unterseite 7 des Verbindungselements 1 verlaufen und dadurch nahezu allesamt mit dem betreffenden Bambusstab 4 verleimt werden.

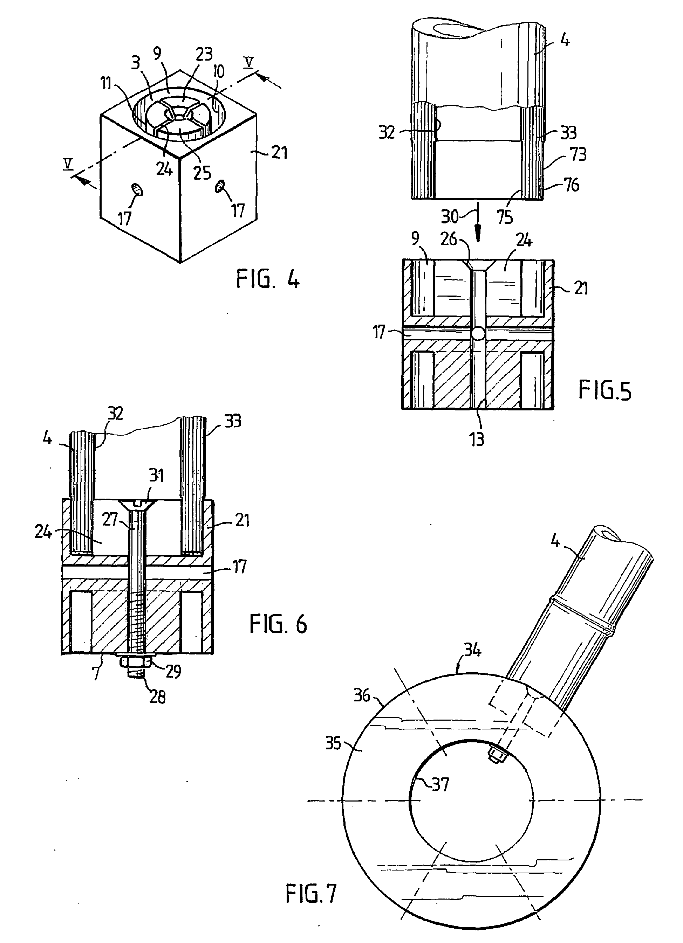

Das Verbindungselement 21 aus Fig. 4 hat dieselbe würfelförmige Gestalt wie das Verbindungselement 14. Wie dort, so umfaßt auch hier die 3-dimensionale Struktur 22 zum Anschluß eines Bambusrohrs 4 eine ringförmigen Vertiefung 9 mit zwei zueinander konzentrischen, zylindermantelförmigen Begrenzungsflächen 10, 11. Der innerhalb dieser Vertiefung verbleibende Kern 23 ist von einer zentralen Bohrung 13 durchsetzt. Im Gegensatz zu dem Verbindungselement 14 ist der Kern 23 jedoch mit zwei sich kreuzenden Einschnitten 24 entlang der Längsachse der Bohrung 13 versehen, die etwa bis zu dem Grund des Kerns 23 bzw. der ringförmigen Vertiefung 9 reichen, so dass die verbleibenden Kernviertel 25 begrenzt nach außen federn können.

Die zentrale Bohrung 13 in dem Kern 23 weist eine kegelförmige Einsenkung 26 auf, in welche der Kopf einer in die Bohrung gesteckten Senkkopfschraube 27 mit einem Maschinengewinde 28 eingreifen kann. Auf dieses Gewinde 28 wird an der dem Anschlußelement 22 gegenüberliegenden Außenseite 7 des Verbindungselements 21 ein Gewindeelement 29 aufgeschraubt. Nach dem Einstecken 30 eines Bambusrohrs 4 in die ringförmige Vertiefung 9 wird dieses Gewindeelement 29 stramm festgezogen. Dabei drückt sich der Schraubenkopf 31 immer tiefer in die kegelförmige Einsenkung 26 und spreizt dadurch die Kernviertel 25 nach außen. Diese wiederum drücken mit ihren Außenseiten 11 an die Innenseite 32 des Mantels 33 eines Bambusrohrs 4 und klemmen dieses dadurch fest. So ist das Einleimen des Bambusrohrs 4 bei diesem Verbindungstyp 21 nicht erforderlich, und die Verbindung kann stets zerstörungsfrei gelöst werden. Anstelle einer Senkkopfschraube 27 kann auch ein konischer Bolzen od. dgl. verwendet werden.

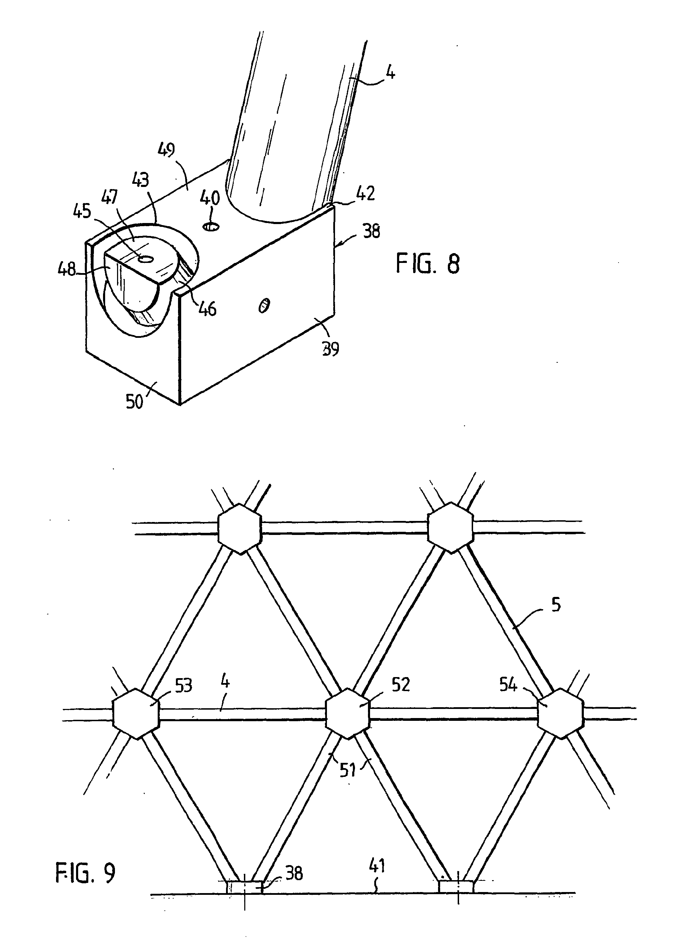

Ein weiteres Verbindungselement 34 ist in Fig. 7 dargestellt. Dieses hat die Gestalt eines Kreisrings 35 mit rechteckigem oder quadratischem Querschnitt. An der Außenseite 36 dieses Rings 35 befinden sich in äquidistanten Abständen über den Umfang verteilt insgesamt sechs 3-dimensionale Strukturen 22 zum Anschluß je eines Bambusrohrs 4. Die 3-dimensionalen Anschlußstrukturen 22 sind hinsichtlich ihrer Topologie und Funktion identisch mit den betreffenden Strukturen 22 des Verbindungselements 21, so dass ein Querschnitt durch den Ring 35 an einer Anschlußstelle 22 weitgehend der Fig. 6 entspricht, mit Ausnahme der Tatsache, dass hier die quer verlaufende Bohrung 17 sowie eine Anschlußstruktur an der Ringinnenseite 37 fehlt.

Der Ring 35 bietet den Vorteil, dass eine nahezu beliebige Anzahl von Anschlußstellen - nur eine bis hin zu sechs oder evtl. noch mehr - je nach Bedarf vorgesehen sein kann, wobei alle Verbindungen 22 lösbar ausgeführt sein können.

Mit einem derartigen Ring können bspw. ebene Trag- oder Stabwerke 5 hergestellt werden, wie sie in Fig. 9 dargestellt sind. Als Basiselemente dienen dabei Verbindungselemente 38 von der in Fig. 8 dargestellten Art. Diese bestehen aus je einem Quader 39, dessen Länge etwa doppelt so groß ist wie seine Höhe und Breite. Sie verfügen über eine mittige, durchgehende Vertikalbohrung 40 zum Festschrauben an einem Fundament 41 od. dgl. Im Bereich ihrer oberen Schmalkanten 42 ist je eine 3-dimensionale Struktur 43 zum Anschluß eines Bambusrohrs 4 vorgesehen.

Die Struktur 43 entspricht hinsichtlich ihrer Funktion der Struktur 3 bei den Ausführungsformen 1 und 14, wo ein Bambusrohr nicht durch Klemmen, sondern durch Einleimen fixiert wird. Allerdings ist hier die ringförmige Vertiefung 44 und die dazu konzentrische Bohrung 45 nicht lotrecht zu einer Oberfläche des Verbindungselements 38 angeordnet, sondern unter einem Winkel von 30° nach oben von der Vertikalbohrung 40 divergierend nach außen geneigt. Außerdem überlappt die Struktur 43 die obere Schmalkante 42, so dass insbesondere die Stirnseite des Kerns 46 der Anschlußstruktur 43 aus zwei lotrecht aufeinander stehenden Teilflächen 47, 48 gebildet wird, die jeweils einen verbliebenen Teil der ursprünglichen Oberflächen 49, 50 des Verbindungselements 38 darstellen. Diese Tatsache beeinträchtigt jedoch nicht die Funktion der 3-dimensionalen Struktur 43 als Anschluß- und Fixierungspunkt für ein Bambusrohr 4.

Wie Fig. 9 erkennen läßt, werden zur Bildung eines Trag- oder Stabwerks 5 zunächst eine Reihe von Verbindungselementen 38 auf einem Fundament 41 festgeschraubt oder anderweitig festgelegt. Nachdem die Anschlußstrukturen 43 mit Leim bestrichen wurden, werden darin Bambusrohre 4 endseitig um jeweils insgesamt 60° nach oben voneinander divergierend eingesetzt. Zwei Bambusrohre 4 werden an ihren benachbarten oberen Enden 51 durch jeweils ein Knotenelement 52 miteinander verbunden.

Das einen Knoten des Stabwerks 5 bildende Verbindungselement 52 hat eine ähnliche Grundform wie das Verbindungselement 1, im Gegensatz zu jenem jedoch die Grundfläche eines regulären Sechsecks mit einer konstanten Stärke, die größer ist als der Maximaldurchmesser eines Bambusrohrs 4. Wie alle anderen Verbindungselemente 1, 14, 21, 34, 38, so besteht auch dieses aus kreuzweise miteinander verleimten Sperrholzschichten, deren Ebenen parallel zu den sechseckigen Grundseiten 53 verlaufen. Der Umfang 54 eines derartigen Verbindungselements 52 setzt sich entsprechend aus sechs gleich großen Rechtecken zusammen.

Vor dem Aushärten des Leims werden benachbarte Knotenelemente 52 durch je ein horizontal verlaufendes Bambusrohr 4 miteinander verbunden, welches gleichzeitig eingeleimt wird. Somit entsteht eine erste Schicht des Trag- oder Stabwerks 5. Sobald diese durch Aushärten des Leims in sich versteift ist, was bei Verwendung von Holzleim etwa eine Viertelstunde in Anspruch nimmt, kann nach dem selben Prinzip eine weitere Tragwerkschicht darauf gesetzt werden, wie dies in Fig. 9 angedeutet ist. Das fertige Tragwerk 5 setzt sich aus lauter gleichen Zellen von der Gestalt eines gleichseitigen Dreiecks zusammen und erhält dadurch eine maximale Stabilität. Bei Bedarf kann natürlich auch eine andere, auch dreidimensionale Struktur eines Trag- oder Stabwerks 5 gewählt werden, bspw. in Form zweier miteinander verbundener, paralleler Flächentragwerke od. dgl. Vorteilhafterweise sind die Bambusrohre 4 stets nur etwa 1 bis 2 m lang, damit nicht durch übermäßige Biegebelastung eines zu langen Bambusrohrs 4 eine Knickwirkung auftreten kann.

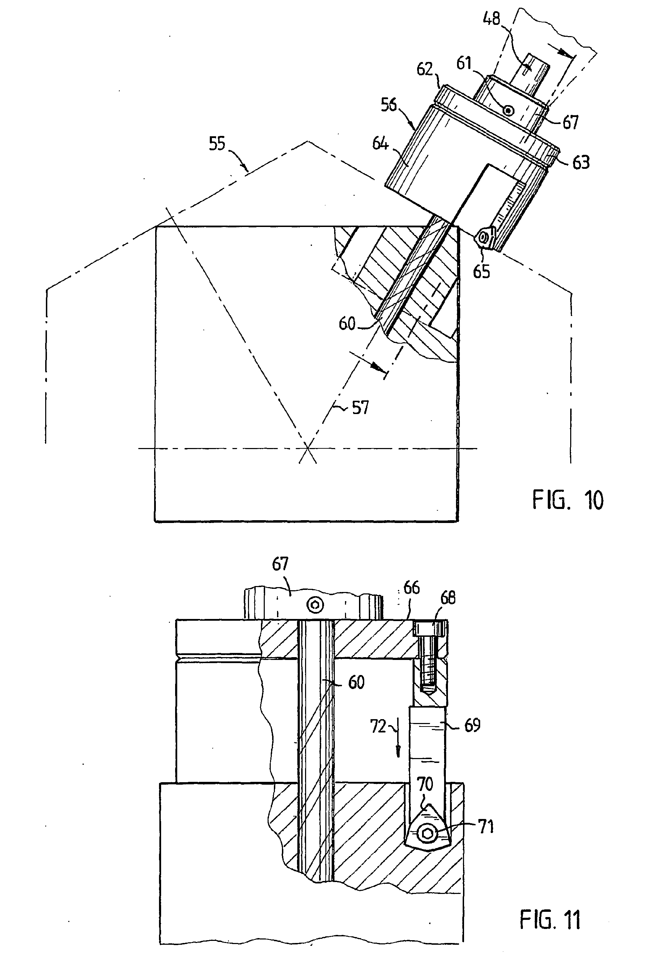

Die Knotenelemente 52 können wie alle anderen Verbindungselemente 1, 14, 21, 34, 38 auf einer Baustelle vor Ort individuell fertiggestellt werden. Zu diesem Zweck werden zunächst Grundkörper 55 von der gewünschten Umfangsgestalt aus einer Platte vorzugsweise aus Holz, insbesondere aus schichtverleimtem Sperrholz, ausgesägt, was ggf. in einer Fabrik oder einem Sägewerk erfolgen kann. In diese Grundkörper 55 werden dann vor Ort, ggf. sogar in schon eingebautem Zustand, die jeweils erforderlichen Anschlußstrukturen 3, 22, 43 eingearbeitet. Dazu dient ein Bearbeitungswerkzeug 56, das in den Fig. 10 und 11 dargestellt ist.

Bei dem Bearbeitungswerkzeug 56 handelt es sich um einen rotierenden Werkzeugkopf, der einen rückwärtigen Anschluß für eine Antriebsmaschine aufweist. Der Anschluß kann bspw. als zu der Werkzeuglängsachse 57 koaxialer Zylinderfortsatz 58 ausgebildet sein, der in das Spannfutter 59 einer Handbohrmaschine einsetzbar ist. Bei der dargestellten Ausführungsform ist dieser zylindrische Montagefortsatz 58 ein Teil des Schaftes eines (Holz-)Bohrers 60, mit dem die zentralen Ausnehmungen 13, 45 einer Anschlußstruktur 3, 22, 43 gebohrt werden. An dem Schaft dieses Bohrers 60 ist mittels einer Klemmschraube 61 ein etwa glockenförmiges Werkzeugteil 62 lösbar festgelegt.

Dieses glockenförmige Werkzeugteil 62 besteht aus einem etwa scheibenringförmigen Teil 63 und einem sich von dessen Peripherie nach vorne erstreckenden, etwa zylindermantelförmigen Teil 64, welches im Bereich seiner Vorderseite die eigentlichen Schneidwerkzeuge 65 zur Erzeugung der ringförmigen Vertiefung 9 einer Anschlußstruktur 3, 22, 43 trägt. Das scheibenringförmige Teil hat einen Inndendurchmesser, der dem Durchmesser des Bohrers 60 entspricht, und einen Außendurchmesser, der etwa dem Außendurchmesser eines Bambusrohrs 4 entspricht. An seiner Rückseite 66 ist dieses Teil 63 mit einem querschnittlich verjüngten, aber ebenfalls zylindrischen Ansatz 67 versehen, durch welchen sich eine radiale Gewindebohrung zur Aufnahme der Klemmschraube 61 erstreckt. Somit kann das scheibenringförmige Teil 63 auf den Schaft eines Bohrers 60 aufgesteckt werden, wobei es durch eine nahezu spielfreie Passung lotrecht zu der Bohrerlängsachse 57 ausgerichtet wird, um sodann durch Eindrehen der Klemmschraube 61 in dieser Position arretiert zu werden.

Das zylindermantelförmige Teil 64 kann entweder integral mit dem scheibenförmigen Teil hergestellt sein, bspw. gemeinsam mit jenem gegossen, oder es kann bspw. aus einem rohrförmigen Teil gearbeitet sein, das wie in Fig. 11 dargestellt mit zu der Bohrerachse 57 parallelen Schrauben 68 von der Rückseite 66 des scheibenringförmigen Teils 63 her an diesem festgeschraubt ist. Im Bereich seiner Vorderseite ist das zylindermantelförmige Teil 64 mit einer Mehrzahl von gleichmäßig entlang des Werkzeugumfangs verteilt angeordneten, etwa rechteckigen Ausschnitten versehen, so dass sich etwa eine kronenförmige Gestalt ergibt.

An mehreren zu der Werkzeuglängsachse 57 etwa parallelen Schnittflächen 69 des zylindermantelförmigen Teils 64 ist jeweils ein Schneidplättchen 70 festgelegt, vorzugsweise mittels einer eine zentrale Ausnehmung des betreffenden Plättchens 70 durchgreifenden Schraube 71. Wie in Fig. 11 zu erkennen ist, obliegt es diesen Schneidplättchen 70, während der Drehbewegung des Bearbeitungswerkzeugs 56 sowie unter dem Einfluß einer überlagerten Vorschubbewegung 72 die ringförmige Vertiefung 9 in den Körper eines Verbindungselements 1, 14, 21, 34, 38, zu schneiden. Dabei kann der Bohrer 60, dessen vorderer Bereich sich vor den Schneidplättchen 70 befindet, eine Führungsfunktion übernehmen.

Bei anderen Ausführungsformen der Erfindung kann die Vertiefung einer Anschlußstruktur auch durch an ihrem Grund angefaste oder insgesamt konische Begrenzungsflächen berandet sein; für die Anfertigung derartiger Vertiefungen müssen die Schneidwerkzeuge eine entsprechende Geometrie aufweisen; ggf. muß auch der Querschnitt des zylindermantelförmigen Teils 64 angepaßt werden.

Wie weiter oben bereits ausgeführt, ist der Wuchs eines Bambusrohrs 4 stets mehr oder weniger unregelmäßig. Obzwar die ringförmige Vertiefung 9 einer erfindungsgemäßen Anschlußstruktur 3, 22, 43 dank der Verwendung eines um eine Achse 57 rotierenden Bearbeitungswerkzeugs 56 optimal rund ist, kann daher im Normalfall ein Bambusrohr 4 nicht bündig eingesetzt werden: Entweder paßt das Bambusrohr überhaupt nicht in die dafür vorgesehene Vertiefung 9, oder es sitzt viel zu stramm oder - wenn die Vertiefung weiter bemessen wird - zu locker, so dass keine Klemmwirkung erzeugt werden kann bzw. Unmengen von Leim benötigt werden, was nicht nur die Kosten in die Höhe treibt, sondern infolge erhöhter Trocknungszeiten auch die Arbeitszeit.

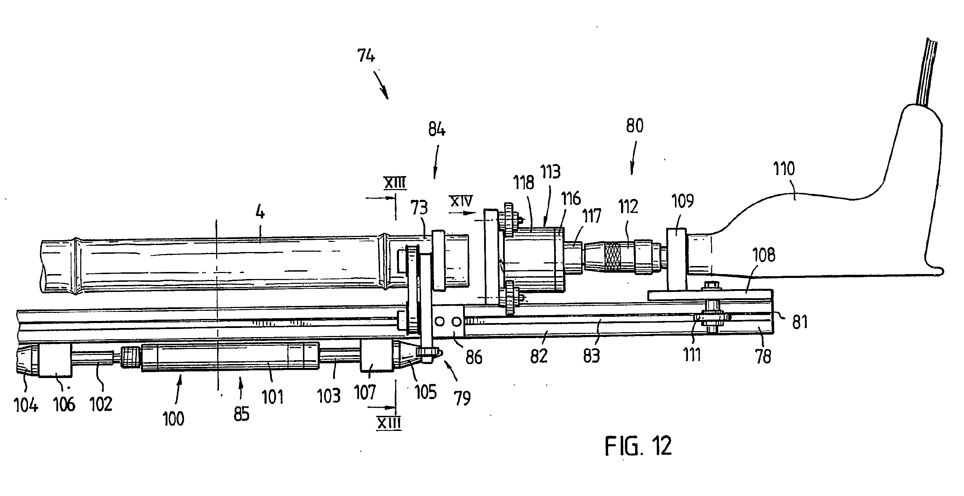

Aus diesem Grund sieht die Erfindung vor, die Enden 73 der auf die gewünschte Länge abgesägten Bambusrohre 4 vor dem Einbau in ein Trag- oder Stabwerk 5 zu bearbeiten. Dabei gilt es, diesen eine genormte Geometrie zu erteilen, so dass sie in die dafür vorgesehenen Vertiefungen 9 der betreffenden Verbindungselemente 1, 14, 21, 34, 38 passen. Dies genügt jedoch im allgemeinen noch nicht zum Bau eines exakt vorgeplanten Trag- oder Stabwerks 5, da oftmals die beiden Enden 73 eines abgesägten Bambusrohrs 4 nicht koaxial zueinander verlaufen. Dies wiederum würde innerhalb eines Tragwerks 5 zu Versetzungen und/oder Spannungen führen, die sich im Laufe der Bauphase allmählich aufsummieren, so dass ein größeres Bauwerk mit zunehmendem Baufortschritt immer schiefer würde. Einer Maschine 74 zur Bearbeitung der Enden 73 eines Bambusrohrs 4 obliegt daher die zusätzliche Aufgabe, Sorge dafür zu tragen, dass nicht nur die beiden Endbereiche 73 eines Bambusrohrs 4 zumindest bereichsweise entlang von Zylindermantelflächen (bei anderen Verbindungstypen bspw. Kegelmantelflächen) verlaufende Oberflächen 75, 76 aufweisen, sondern dass auch die Längsachsen dieser zylindrischen (kegelförmigen, etc.) Bereiche beider Enden 73 koaxial zueinander ausgerichtet sind. Eine Maschine 74, welche dies zu leisten vermag, ist in Fig. 12 dargestellt.

Genau genommen ist nur etwa die Hälfte dieser Maschine 74 zu sehen; der bezüglich der Symmetrieebene 77 spiegelbildliche, linke Maschinenteil wurde aus Platzgründen weggelassen. Die Maschine 74 besteht im Grunde genommen aus vier Komponenten: Einem langgestreckten, steifen Profil 78, das sowohl als Referenz für die Längsachse der Maschine 74 verwendet wird wie auch zum Anbau der weiteren Maschinenkomponenten. Etwa in der Mitte des Profils 78 ist an diesem eine Einrichtung 79 zum Einspannen eines zu bearbeitenden Bambusrohrs 4 befestigt. Schließlich gibt es noch zwei Bearbeitungseinrichtungen 80, die an beiden Seiten der Einspannvorrichtung 79 angeordnet sind und ebenfalls von dem Profil 78 getragen werden. Im Rahmen einer einfacheren Version kann auch eine Bearbeitungseinrichtung 80 eingespart werden, wenn die verbleibende mit wenigen Handgriffen auf das andere Profilende 81 versetzt werden kann oder bspw. die Spanneinrichtung samt eines eingespannten Bambusrohrs 4 um 180° rotierbar ausgeführt ist.

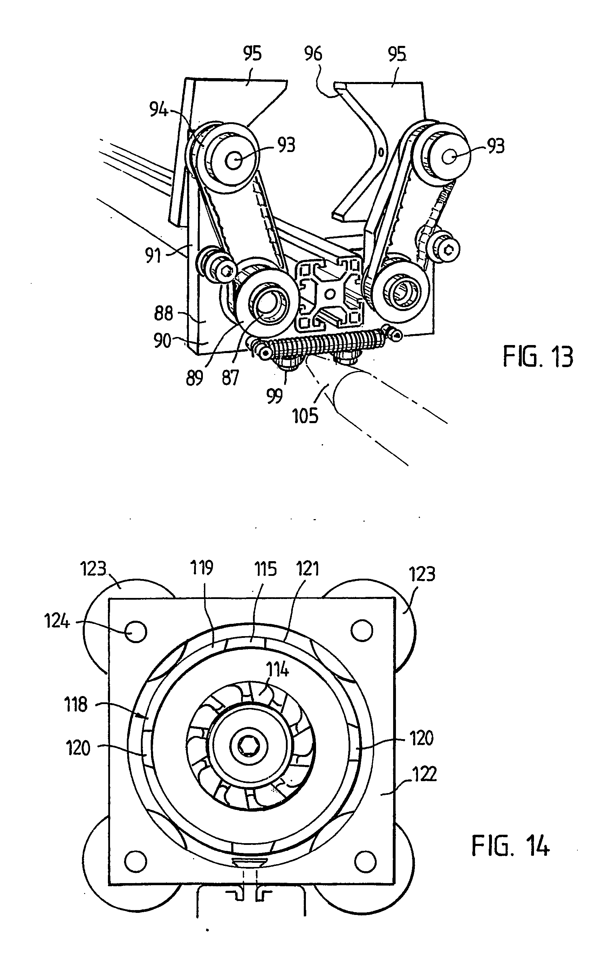

Als Profil 78 kann ein handelsübliches Konstruktionselement Verwendung finden. Dieses besteht vorzugsweise aus einem Vierkantprofil mit quadratischem Querschnitt, dessen Längsseiten 82 je eine in Längsrichtung des Profils verlaufende, T-förmig hinterschnittene Befestigungsnut 83 aufweisen, vgl. Fig. 13. An diesen Nuten 83 können bspw. im Bereich beider Profilenden nicht dargestellte Böcke zum Abstützen der Maschine 74 befestigt werden.

Die Einspannvorrichtung 79 umfaßt zwei Greifersätze 84 sowie eine gemeinsame Betätigungseinrichtung 85.

Ein Greifersatz 84 ist in Fig. 13 wiedergegeben. Mittels seitlicher Befestigungswinkel 86 ist zu beiden Seiten des Tragprofils 78 je ein zu diesem paralleler Achsbolzen 87 unverdrehbar festgelegt. Auf diese solchermaßen feststehenden Achsbolzen 87 ist sodann jeweils eine aufrecht stehende Platte 88 aufgesteckt, die zu diesem Zweck eine Durchsteckausnehmung aufweist, deren Durchmesser mit dem Achsbolzendurchmesser korrespondiert. Die Platten 88 schlagen einerseits an dem betreffenden Befestigungswinkel 86 an und werden an dem anderen Ende des betreffenden Achsbolzens 87 durch je ein an dem Achsbolzen unverdrehbar festgelegtes, bspw. aufgequetschtes Ritzel 89 fixiert, so dass sie zwar um den betreffenden Achsbolzen 87 verschwenken, sich von diesem jedoch nicht lösen können. Die Platten 88 sind jeweils als doppelarmige Hebel ausgebildet mit einem von der betreffenden Durchsteckausnehmung nach unten ragenden, kürzeren Arm 90 und einem nach oben ragenden, längeren Arm 91. Mittels einer unter dem Tragprofil 78 hindurchgeführten Zugfeder 92 sind die beiden unteren Hebelarme 90 miteinander verbunden und werden dadurch zueinander gezogen, bis sie an den Längsseiten 82 des Tragprofils 78 anstoßen. Die oberen Arme 91 der Platten 88 nehmen solchenfalls eine maximal gespreizte Position ein.

Etwa an dem oberen Ende jeder Platte 88 befindet sich eine weitere Durchsteckausnehmung für eine Drehachse 93, die dort drehbar gelagert ist. Jede dieser Drehachsen 93 trägt an einem Ende ein Ritzel 94 und an dem anderen Ende eine Platte 95, deren Umfang eine konkave Seite 96 aufweist bspw. mit einem hyperbelartigen Verlauf.

Das Ritzel 94 wie auch die Platte 95 ist jeweils unverdrehbar mit der Drehachse 93 verbunden, bspw. aufgepreßt, festgeklemmt (Klemmschraube), verlötet und/oder verschweißt. Andererseits ist das Ritzel 94 über einen Zahnriemen 97, der durch eine Vorrichtung 98 straff gespannt gehalten wird, drehbewegungsmäßig mit dem Ritzel 89 an dem feststehenden Achsbolzen 87 gekoppelt. Dadurch wird erreicht, dass die Orientierung der oberen Platten 95 im Raum unabhängig von der Verschwenkstellung der unteren Platten 88 beibehalten wird. Diese Funktion ist wirkungsmäßig ähnlich einer Parallelführung mittels eines Gestänges aus zwei zueinander parallelen, verschwenkbaren Stäben.

Die oberen Platten 95 sind derart ausgerichtet, dass jeweils ihre konkaven Seiten 96 aufeinander zu weisen. Diese Seiten 96 können daher beim Zusammenfahren der oberen Hebelarme 91 der unteren Platten 88 einander angenähert werden, um zwischen sich einen Bambusstab 4 einzuklemmen.

Zur Betätigung eines derartigen Greifersatzes 84 ist an den unteren Stirnseiten der nach unten ragenden Hebelarme 90 der Platten 88 je ein nach unten ragender Fortsatz vorgesehen, bspw. ein eingeschraubter Bolzen 99. Hier greift die Betätigungsvorrichtung 85 an.

Die Betätigungsvorrichtung 85 umfaßt einen unterhalb des Tragprofils 78 angeordneten, parallel zu diesem ausgerichteten Pneumatikzylinder 100. Sowohl an dem Zylindergehäuse 101 als auch an dem Kolben ist über je eine zu der Zylinderachse koaxiale Stange 102, 103 je eine axial nach außen weisende Kegelspitze 104, 105 befestigt. Die beiden Stangen 102, 103 durchgreifen je einen Lagerungsbock 106, 107, mit denen die gesamte Betätigungsanordnung 85 an der Unterseite des Tragprofils 78 in dessen Längsrichtung geführt verschiebbar gelagert ist.

Da das Zylindergehäuse 101 selbst nicht fixiert ist, kann es sich in Längsrichtung des Tragprofils 78 begrenzt bewegen. Wird der Pneumatikzylinder 100 pneumatisch auseinandergefahren, so gelangen die Kegelspitzen 104, 105 jeweils zwischen zwei nach unten ragende Fortsätze, insbesondere Bolzen 99, je eines Greifersatzes 84, und drücken diese auseinander. Dadurch schwenken die oberen Hebel 91 nach innen, und der Bambusstab 4 wird im Bereich seiner beiden Enden 73 zwischen je zwei konkaven Backen 95, 96 festgeklemmt. Dabei findet jeweils eine Zentrierung der beiden Enden 73 symmetrisch zu der vertikalen Längsebene des Tragprofils 78 statt, weil die Kegelspitzen 104, 105 gleichmäßig auf die beiden Arme 90 eines Greifersatzes 84 einwirken. Die Höhenzentrierung erfolgt durch die konkave Gestalt der Klemmbacken 96. Dabei sind die exakten Abmessungen, bspw. der Durchmesser eines Bambusstabs 4, nicht von Belang, da sich der Pneumatikzylinder 100 in Längsrichtung selbsttätig verschiebt, bis auf alle Arme 90 dieselben Kräfte einwirken.

Der solchermaßen zentrierte Bambusstab 4 wird sodann im Bereich seiner beiden Enden bearbeitet, d.h. über ein vorgegebenes Maß überstehende Oberflächenbereiche 75, 76 werden abgetragen. Dies leistet je eine Bearbeitungseinrichtung 80.

Jede Bearbeitungseinrichtung 80 umfaßt einen entlang des Tragprofils 78 verschiebbaren Schlitten 108 mit einer Einrichtung 109 zum Einspannen einer Bohrmaschine 110 unter gleichzeitiger Ausrichtung des Bohrfutters koaxial zu einer Bearbeitungsachse, die mittig oberhalb des Tragprofils 78 verläuft sowie in einer Höhe, die durch den am stärksten zurückweichenden Bereich der konkaven Klemmbacken 96 bestimmt ist.

Wenn der Schlitten 108, der bspw. mittels seitlicher, in die Längsnut 83 eingreifender Rollen 111 parallelverschiebbar geführt ist, an das betreffende Ende 73 eines eingespannten Bambusrohrs 4 herangeschoben wird, so bleibt daher die Rotationsachse eines in das Spannfutter 112 der Bohrmaschine 110 eingespannten Bearbeitungswerkzeugs 113 stets koaxial zu der durch die oben erläuterte Einspannung vorgegebenen Längsachse des Bambusrohrs 4.

Das Bearbeitungswerkzeug 113, welches gleichzeitig die Innen- und Außenseite 75, 76 des Bambusrohrs 4 bearbeitet, ist in Fig. 14 in einer Vorderansicht dargestellt. Es umfaßt ein inneres und ein äußeres Schneidwerkzeug 114, 115, denen jeweils die Bearbeitung der Innenseite 75 bzw. der Außenseite 76 des Bambusrohrs 4 übertragen ist.

Das innere Schneidwerkzeug 114 hat die Gestalt eines Fräsers, insbesondere eines Walzenstirnfräsers, mit einem rückwärtigen Befestigungsfortsatz zum Einspannen in das Spannfutter 112. Dieses Schneidwerkzeug 114 dringt in den Hohlraum eines Bambusrohrs 4 ein, um dessen Innenwand 75 zumindest bereichsweise zylindrisch zu bearbeiten.

An dem Schaft des Schneidwerkzeugs 114 ist ein weiteres Teil festgelegt, das wie der äußere Teil des Werkzeugs 56 eine glockenförmige Gestalt hat. Obzwar es bspw. aus einem Teil gegossen sein könnte, besteht es bei der dargestellten Ausführungsform zum einen aus einem scheibenringförmigen Teil 116 und zum anderen aus einem daran befestigten, zylindrischen Teil 118.

An dem scheibenringförmigen Teil 116 befindet sich ein rückwärtiger, zylindrischer Fortsatz 117, der von einer radial verlaufenden Gewindebohrung zur Aufnahme einer Klemmschraube durchsetzt ist. Mit dieser Klemmschraube wird das scheibenringförmige Teil 116 an dem Schaft des Schneidwerkzeugs 114 fixiert.

Mittels das scheibenringförmige Teil 116 durchgreifender Schrauben ist dieses mit dem zylindrischen Teil verbunden. In dessen vordere Stirnseite 119 sind mehrere Zähne 120 eingeschnitten, deren Schneiden bzw. Spitzen leicht nach innen gebogen sind. Bei dem Vorschieben des Bearbeitungswerkzeugs 113 wird von diesen Zähnen 120 die Außenseite 76 des Bambusrohrs 4 bearbeitet, um hier zumindest bereichsweise entlang von Zylindermantelflächen verlaufende Oberflächen zu schaffen, welche das Einsetzen des Bambusrohrendes 73 in eine entsprechende Vertiefung 9 eines Verbindungselements 1, 14, 21, 34, 38 erlauben.

Damit bei dieser Bearbeitung die aufgrund eines unregelmäßigen Wuchses nötigenfalls asymmetrisch an dem Ende 73 des Bambusrohrs 4 eingreifenden Schneidwerkzeuge 114, 115 keine Vibrationen des Bearbeitungswerkzeugs 113 hervorrufen können, wird dieses zusätzlich an dem Außenmantel 121 des zylindrischen Teils 118 abgestützt. Dies leistet ein weiterer, an dem Tragprofil 78 festgelegter Bock 122, der das zylindrische Teil 118 rahmenförmig umgibt und mehrere, vorzugsweise drei oder vier Rollen 123 aufweist, die um zu der Rotationsachse des Bearbeitungswerkzeugs 113 bzw. zu der Längsachse des Tragprofils 78 parallele Drehachsen 124 rotieren können. Diese Rollen 123 drücken von verschiedenen Seiten, bspw. aus um jeweils 90° oder 120° gegeneinander versetzten Richtungen, gegen den Außenmantel 121 des Bearbeitungswerkzeugs 113, so dass Vibrationen desselben zuverlässig vermieden sind.

Beim Herstellen von ineinanderpassenden Bambusrohren 4 und Verbindungselementen 1, 14, 21, 34, 38, 52 sollte darauf geachtet werden, dass die achsparallele Länge eines abtragend bearbeiteten Endbereichs 73 eines Bambusrohrs 4 gleich oder möglichst etwas kürzer ist als die Tiefenerstreckung der diesen aufnehmenden Ringvertiefung 9 in dem betreffenden Verbindungselement 1, 14, 21, 34, 38, 52, damit der solchermaßen bloßgelegte, d. h. von seiner wasserabweisenden Schicht befreite Bereich 73 eines Bambusrohrs 4 von dem Verbindungselement 1, 14, 21, 34, 38, 52 und ggf. einer Leimschicht od. dgl. abgedeckt wird.

Neben Bambusrohren 4 als Stabelementen können bei dem erfindungsgemäßen System auch Holzstäbe 125, 126 bspw. aus Schwachholz, verwendet werden, die entweder direkt als Vollholzstäbe eingesetzt werden oder mit einer koaxial ganz oder teilweise durchgehenden Hohlbohrung 127 versehen sein können, bspw., um ein rißfreies Schwinden während der Trocknung zu begünstigen.

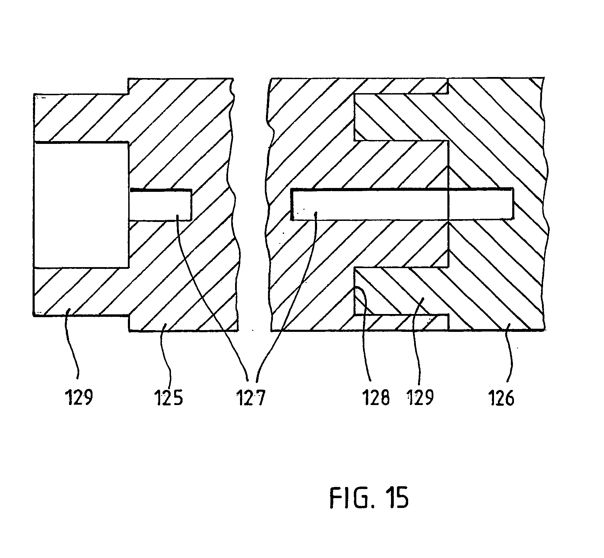

Derartige Holzstäbe 125, 126 können bei Bedarf zwecks Verlängerung koaxial aneinandergesetzt werden, wie dies Fig. 15 zu entnehmen ist. Dazu haben die aneinanderzufügenden Enden benachbarter Stäbe 125, 126 ineinanderpassende Ausgestaltungen: In der Stirnseite des einen Stabs 125 befindet sich bspw. eine rundumlaufende Ringnut 128, an der Stirnseite des anderen Stabs 126 ein dazu komplementärer Ringfortsatz 129. Diese bilden zusammen eine formschlüssige Steckverbindung, die bspw. durch Auftrag von Klebstoff auf die Oberflächen eines Steckelements 128, 129 aneinander fixiert werden können. Daneben ist es auch möglich, in eine zentrale Hohlbohrung 127 je ein Gewindeelement - Gewindebuchse einerseits und Gewindebolzen andererseits - einzupressen oder einzukleben, so dass derartige Stabelemente 125, 126 auch - zusätzlich zu der formschlüssigen Steckverbindung - zusammengeschraubt werden können.

## Patentansprüche

1. System aus zur Bildung eines Trag- oder Stabwerks (5) miteinander verbundenen oder verbindbaren Stabelementen (4,125,126) und zwischen diesen im Bereich all derjenigen Verbindungsstellen, wo sich zwei oder mehrere Stabelemente treffen, deren Längsachsen nicht koaxial zueinander verlaufen, angeordneten oder anordenbaren Verbindungselementen (1,14,21,34,38,52), wobei
a) die Stabelemente (4,125,126) aus wenigstens je einem Segment eines Werkstoffs von hochwachsenden Pflanzen bestehen, und
b) die Verbindungselemente (1,14,21,34,38,52) aus einem festen, nachwachsenden Werkstoff bestehen, und wobei
c) wenigstens ein Ende eines Stabelements (4,125,126), ein damit zu verbindendes Verbindungselement (1,14,21,34,38,52) und/oder das Ende eines anzufügenden, weiteren Stabelements (4,125,126) derart bearbeitet sind, dass es (sie) zumindest bereichsweise entlang wohldefinierter geometrischer Körper verlaufende Oberflächen aufweist (-en),
**dadurch gekennzeichnet,**
d) **dass** im Bereich der Verbindung eines Stabelementes (4,125,126) mit einem Verbindungs- oder einem weiteren Stabelement (1,14,21,34,38;4,125,126) an jedem der beiden Körper (4,125,126;1,14,21,34,38,52) jeweils eine zumindest bereichsweise entlang der Mantelfläche eines Zylinders, Kegels, Prismas oder einer Pyramide verlaufende Oberfläche (11 ;76) sowie eine zumindest bereichsweise entlang eines Hohlzylinders, -kegels, -prismas und/oder einer Hohlpyramide verlaufende Oberfläche (11;75) vorgesehen ist,
e) welche ein Zusammenfügen nach dem Steckprinzip mit nahe aneinander liegenden Oberflächen erlauben, die zueinander komplementär sind und sich nach Art einer Passung für eine Arretierung mittels Klemmen und/oder Leimen eignen.

2. System nach Anspruch 1, **dadurch gekennzeichnet, dass** die Verbindung eines Stabelements (4, 125, 126) mit einem Verbindungs- oder einem weiteren Stabelement (1,14,21,34,38;4,125,126) als Steckverbindung (30) ausgebildet ist.

3. System nach Anspruch 1 oder 2, **dadurch gekennzeichnet, dass** die Verbindung eines Stabelements (4,125,126) mit einem Verbindungs- oder einem weiteren Stabelement (1,14,21,34,38;4,125,126) als Klemm- (21,34) oder Klebeverbindung (1,14,38) ausgebildet ist.

4. System nach einem der vorhergehenden Ansprüche, **dadurch gekennzeichnet, dass** ein Verbindungselement (1,14,21,34,38,52) wenigstens einen zum Anschluß an den Schaft eines Stabelements (4,125,126) dienenden Oberflächenbereich aufweist, der einen konkaven Verlauf aufweist, insbesondere einen etwa einem Ausschnitt der Mantelfläche eines Hohlzylinders folgenden Verlauf.

5. System nach einem der vorhergehenden Ansprüche, **dadurch gekennzeichnet, dass** wenigstens ein Stabelement (4,125,126) einen an seiner Außenseite rund gefrästen Schaft aufweist.

6. Verfahren zur Herstellung eines Trag- oder Stabwerks (5) aus miteinander zu verbindenden Stabelementen (4,125,126) und zwischen diesen im Bereich all derjenigen Verbindungsstellen, wo sich zwei oder mehrere Stabelemente treffen, deren Längsachsen nicht koaxial zueinander verlaufen, anzuordnenden Verbindungselementen (1,14,21,34,38,52), wobei
a) die Stabelemente (4,125,126) aus wenigstens je einem Segment eines Werkstoffs von hochwachsenden Pflanzen zur Verfügung gestellt werden, und
b) die Verbindungselemente (1,14,21,34,38,52) aus einem festen, nachwachsenden Werkstoff, und wobei
c) wenigstens ein Ende eines Stabelements (4,125,126), ein damit zu verbindendes Verbindungselement (1,14,21,34,38,52) und/oder das Ende eines anzufügenden, weiteren Stabelements (4,125,126) derart bearbeitet werden, dass es (sie) zumindest bereichsweise entlang wohldefinierter geometrischer Körper verlaufende Oberflächen aufweist (-en),
**dadurch gekennzeichnet,**
d) **dass** bei der Bearbeitung im Bereich der Verbindung eines Stabelementes (4,125,126) mit einem Verbindungs- oder weiteren Stabelement (1,14,21,34,38;4,125,126) an jedem der beiden Körper (4,125,126;1,14,21,34,38,52) jeweils eine zumindest bereichsweise entlang der Mantelfläche eines Zylinders, Kegels, Prismas oder einer Pyramide verlaufende Oberfläche (11;76) sowie eine zumindest bereichsweise entlang eines Hohlzylinders, -kegels, -prismas und/oder einer Hohlpyramide verlaufende Oberfläche (11;75) erzeugt wird,
e) und **dass** die solchermaßen bearbeiteten Oberflächen (11;75) nach dem Steckprinzip zusammengefügt werden mit nahe aneinander liegenden Oberflächen, die zueinander komplementär sind und sich nach Art einer Passung für eine Arretierung mittels Klemmen und/oder Leimen eignen.

7. Verfahren nach Anspruch 6, **dadurch gekennzeichnet, dass** die Körper und/oder Oberflächen der miteinander zu verbindenden Teile (4,125,126;1,14,21,34,38,52) abtragend, insbesondere spanabhebend bearbeitet werden.

8. Verfahren nach Anspruch 6 oder 7, **dadurch gekennzeichnet, dass** die beiden Enden (73) eines Stabelements (4,125,126) derart bearbeitet werden, dass die (Längs-)Symmetrieachsen der bearbeiteten Bereiche (75;76) miteinander fluchten.

9. Vorrichtung zur Bildung eines Trag- oder Stabwerks (5) aus miteinander verbundenen oder verbindbaren Stabelementen (4,125,126) und zwischen diesen im Bereich all derjenigen Verbindungsstellen, wo sich zwei oder mehrere Stabelemente treffen, deren Längsachsen nicht koaxial zueinander verlaufen, angeordneten oder anordenbaren Verbindungselementen, wobei
a) die Stabelemente (4,125,126) aus wenigstens je einem Segment eines Werkstoffs von hochwachsenden Pflanzen bestehen, und
b) die Verbindungselemente (1,14,21,34,38,52) aus einem festen, nachwachsenden Werkstoff bestehen,
c) unter Bearbeitung wenigstens eines Verbindungselements (1,14,21,34,38,52) und/oder der Enden (73) damit oder miteinander zu verbindender Stabelemente (4,125,126) derart, dass dies(e) zumindest bereichsweise entlang wohldefinierter geometrischer Körper verlaufende Oberflächen (10,11;75,76) erhält (erhalten),
**gekennzeichnet durch**
d) wenigstens ein als Abtragungswerkzeug, insbesondere als Schneidwerkzeug, ausgebildetes Werkzeug (56, 113) zur Bearbeitung wenigstens eines Verbindungselements (1,14,21,34,38,52) und/oder der Enden damit oder miteinander zu verbindender Stabelemente (4,125,126) derart, dass an dem bearbeiteten Körper (4,125,126;1,14,21,34,38,52) im Bereich der Verbindung eines Stabelementes (4,125,126) mit einem Verbindungselement (1,14,21,34,38) gleichzeitig eine zumindest bereichsweise entlang der Mantelfläche eines Zylinders, Kegels, Prismas oder einer Pyramide verlaufende Oberfläche (11,76) sowie eine zumindest bereichsweise entlang eines Hohlzylinders, -kegels, -prismas und/oder einer Hohlpyramide verlaufende Oberfläche (11;75) entsteht,
e) welche ein Zusammenfügen nach dem Steckprinzip mit nahe aneinander liegenden Oberflächen erlauben, die zueinander komplementär sind und sich nach Art einer Passung für eine Arretierung mittels Klemmen und/oder Leimen eignen.

10. Vorrichtung nach Anspruch 9, umfassend wenigstens ein Werkzeug (113) zur Bearbeitung der Enden (73) eines Stabelements (4,125,126), **gekennzeichnet durch** eine Einrichtung (84) zum Einspannen eines Stabelements (4,125,126) derart, daß dessen beide Enden (73) möglichst parallel bzw. konzentrisch zu einer Längsachse der Bearbeitungsvorrichtung (74) ausgerichtet sind.

11. Vorrichtung nach Anspruch 10, **gekennzeichnet durch** je eine Halterung (108) und/oder Befestigungsvorrichtung für je ein Bearbeitungswerkzeug (113) an jedem Ende der Spannvorrichtung (84).

12. Vorrichtung nach einem der Ansprüche 9 bis 11, **gekennzeichnet durch** eine Vorrichtung (111) zum Führen der Bearbeitungswerkzeuge (113) bzw. ihrer Halterungen (108) und/oder Befestigungen in der Vorschubrichtung entlang der Längsachse der Bearbeitungsvorrichtung (74).

## Claims

1. System comprising bar-elements (4,125,126) joined or joinable to form a truss (5), and connecting elements (1,14,21,34,38,52) inserted or insertable between these bar-elements (4,125,126) at all such joint places, where two or more bar-elements meet whose longitudinal axes are not coaxial to each other, whereby
a) the bar-elements (4,125,126) consist of at least one segment of a material from high-growing plants each, and
b) the connecting elements (1,14,21,34,38,52) consist of a rigid, regenerative material, and whereby
c) at least one end of a bar-element (4,125,126), a connecting element (1,14,21,34,38,52) which is to be mounted to said bar-element, and/or the end of a further bar-element (4,125,126) which is to be connected, are treated such that they exhibit surfaces running along well-defined geometrical bodies at least in selected areas,
**characterised in that**
d) at the joint between a bar-element (4,125,126) and a connecting element or a further bar-element (1,14,21,34,38;4,125,126), each of both bodies (4,125,126;1,14,21,34,38,52) exhibits at least in a selected area a surface which runs along the surface (11;76) generated by a cylinder, cone, prism or a pyramid, as well as at least in another selected area a surface (11;75) which runs along a hollow cylinder, hollow cone, hollow prism and/or a hollow pyramid respectively,
e) which surfaces permit an assembly by plugging together with closely adjoining surfaces which are complementary to each other and suitable for locking by clamping and/or glueing like a fit.

2. System according to claim 1, **characterised in that** the joint between a bar-element (4,125,126) and a connecting element or a further bar-element (1,14,21,34,38;4,125,126) is designed as a plug-connection (30).

3. System according to claim 1 or 2, **characterised in that** the joint between a bar-element (4,125,126) and a connecting element or a further bar-element (1,14,21,34,38;4,125,126) is designed as a clamping (21,34) or glueing (1,14,38) connection.

4. System according to one of the previous claims, **characterised in that** one connecting element (1,14,21,34,38,52) exhibits at least one surface area of concave shape, in particular a shape which approximately corresponds to a part of the lateral surface of a hollow cylinder, for connecting to the shaft of a bar-element (4,125,126).

5. System according to one of the previous claims, **characterised in that** at least one bar-element (4,125,126) exhibits a shaft milled to a round shape at its outer surface.

6. Process to produce a truss (5) from bar-elements (4,125,126), which are to be joined, and from connecting elements (1,14,21,34,38,52), which are to be placed between these bar-elements at all such joint places, where two or more bar-elements meet whose longitudinal axes are not coaxial to each other, whereby
a) the rod-like -elements (4,125,126) are made from at least one segment of a material from high-growing plants each, as well as
b) the connecting elements (1,14,21,34,38,52) consist of a rigid, regenerative material, and whereby
c) at least one end of a bar-element (4,125,126), a connecting element (1,14,21,34,38,52) which is to be mounted to said bar-element, and/or the end of a further bar-element (4,125,126) which is to be connected, are treated such that they exhibit surfaces running along well-defined geometrical bodies at least in selected areas,
**characterised in that**
d) at the joint between a bar-element (4,125,126) and a connecting element or a further bar-element (1,14,21,34,38,4,125,126), each of both element bodies (4,125,126;1,14,21,34,38,52) exhibits at least in a selected area a surface which runs along the surface (11;76) generated by a cylinder, cone, prism or a pyramid, as well as at least in another selected area a surface (11;75) which runs along a hollow cylinder, hollow cone, hollow prism and or hollow pyramid respectively,
e) and that surfaces (11;75) processed in such a way are assembled by plugging them together with closely adjoining surfaces which are complementary to each other and suitable for locking by clamping and/or glueing like a fit.

7. Process according to claim 6, **characterised in that** the bodies and/or the surfaces of the parts (4,125,126;1,14,21,34,38,52) which are to be connected are processed by ablating, particularly by cutting.

8. Process according to claim 6 or 7, **characterised in that** both ends (73) of a bar-element (4,125,126) are processed in such a way, that the (longitudinal) symmetry axes of the processed areas (75;76) are in line with each other.

9. Apparatus to produce a truss (5) from bar-elements (4,125,126), which are to be joined, and from connecting elements (1,14,21,34,38,52), which are to be placed between these bar-elements at all such joint places, where two or more bar-elements meet whose longitudinal axes are not coaxial to each other, whereby
a) the rod-like -elements (4,125,126) consist of at least one segment of a material from high-growing plants each, as well as
b) the connecting elements (1,14,21,34,38,52) consist of a rigid, regenerative material,
c) by machining of at least one connecting element (1,14,21,34,38,52) and/or the ends (73) of bar-elements (4,125,126), which are to be mounted to said connecting element and/or to each other in such way that they exhibit surfaces (10,11;75,76) running along well-defined geometrical bodies at least in selected areas,
**characterised by**
d) at least one tool (56,113) designed as an ablating tool, in particular as a cutting tool, for machining at least one connecting element (1,14,21,34,38,52) made from a rigid, regenerative material and/or the ends (73) of bar-elements (4,125,126) made from at least one segment of a material from high-growing plants each, which are to be mounted to said connecting element or to one another, in such a way that they obtain surfaces (10,11;75,76) which run along well-defined geometrical bodies at least in selected areas, whereby at the processed body (4, 125, 126; 1,14, 21, 34, 38, 52) in the area of the joint of a bar-element (4,125,126) with a connecting element (1,14,21,34,38) there is formed simultaneously a surface which runs along the lateral surface (11;76) of a cylinder, cone, prism or a pyramid at least in selected areas as well as a surface (11;75) which runs along a hollow cylinder, hollow cone, hollow prism and or hollow pyramid at least in selected areas, respectively,
e) which surfaces permit an assembly by plugging together with closely adjoining surfaces which are complementary to each other and suitable for locking by clamping and/or glueing like a fit.

10. Apparatus according to claim 9, comprising at least one tool (113) for processing the ends (73) of a bar-element (4,125,126), **characterised by** a device (84) for clamping a bar-element (4,125,126) in such a way that both of its ends(73) are as parallel respectively concentrical as possible aligned to a longitudinal axis of the processing apparatus (74).

11. Apparatus according to claim 10, **characterised by** a device (108) at each end of the clamping device (84) for holding and/or mounting of a processing-tool (113).

12. Apparatus according to one of the claims 9 through 11, **characterised by** a device (111) to guide the processing tools (113) or their holdings (108) respectively in the feeding direction along the longitudinal axis of the processing apparatus (74).

## Revendications

1. Système d'éléments formant barreau (4, 125, 126) joints ou pouvant être joints les uns aux autres, pour la réalisation d'une ossature porteuse ou d'une ossature en barreaux assemblés (5), et d'éléments de jonction (1, 14, 21, 34, 38, 52) disposés ou pouvant être disposés entre ces éléments formant barreau, dans la région de tous les emplacements de jonction où se rencontrent deux ou plus de deux éléments formant barreau dont les axes longitudinaux ne sont pas coaxiaux l'un à l'autre, dans lequel
a) les éléments formant barreau (4, 125, 126) sont chacun constitués d'au moins un segment d'un matériau tiré de végétaux de grande taille, et
b) les éléments de jonction (1, 14, 21, 34, 38, 52) sont constitués d'un matériau solide, à dilatation ultérieure, et dans lequel
c) au moins une extrémité d'un élément formant barreau (4, 125, 126), un élément de jonction (1, 14, 21, 34, 38, 52) devant être joint à celle-ci et/ou l'extrémité d'un autre élément formant barreau (4, 125, 126) à adjoindre, sont usinés de telle manière qu'il ou elle (ils ou elles) présente(nt) des surfaces se développant, au moins par zones, le long de corps géométriques bien définis,
**caractérisé**
d) **en ce que** dans la région de la jonction d'un élément formant barreau (4, 125, 126) avec un élément de jonction ou un autre élément formant barreau (1, 14, 21, 34, 38; 4, 125, 126), il est prévu, sur chacun des deux corps (4, 125, 126; 1, 14, 21, 34, 38, 52), une surface (11; 76) se développant, au moins par zones, le long de la surface d'enveloppe d'un cylindre, d'un cône, d'un prisme ou d'une pyramide, ainsi qu'une surface (11; 75) se développant, au moins par zones, le long d'un cylindre creux, d'un cône creux, d'un prisme creux et/ou d'une pyramide creuse,
e) qui permettent un assemblage, selon le principe de l'enfichage, avec des surfaces situées à proximité l'une de l'autre, qui sont complémentaires l'une de l'autre et sont adaptées pour un blocage par coincement et/ou collage à la manière d'un ajustement serré.

2. Système selon la revendication 1, **caractérisé en ce que** la jonction d'un élément formant barreau (4, 125, 126) avec un élément de jonction ou un autre élément formant barreau (1, 14, 21, 34, 38; 4, 125, 126) est conçue sous forme d'une jonction par enfichage (30).

3. Système selon la revendication 1 ou 2, **caractérisé en ce que** la jonction d'un élément formant barreau (4, 125, 126) avec un élément de jonction ou un autre élément formant barreau (1, 14, 21, 34, 38; 4, 125, 126) est conçue sous forme d'une jonction par coincement (21, 34) ou d'une jonction à l'aide de colle (1, 14, 38).

4. Système selon l'une des revendications précédentes, **caractérisé en ce qu'**un élément de jonction (1, 14, 21, 34, 38, 52) présente au moins une partie de surface utilisée pour le raccordement à la queue d'un élément formant barreau (4, 125, 126), partie de surface qui présente une allure concave, en particulier une allure épousant à peu près un secteur de la surface d'enveloppe d'un cylindre creux.

5. Système selon l'une des revendications précédentes, **caractérisé en ce qu'**au moins un élément formant barreau (4, 125, 126) présente une queue fraisée sous une forme ronde au niveau de sa surface extérieure.

6. Procédé pour fabriquer une ossature porteuse ou une ossature en barreaux assemblés (5) à partir d'éléments formant barreau (4, 125, 126) à joindre les uns aux autres et d'éléments de jonction (1, 14, 21, 34, 38, 52) devant être disposés entre ces éléments formant barreau, dans la région de tous les emplacements de jonction où se rencontrent deux ou plus de deux éléments formant barreau dont les axes longitudinaux ne sont pas coaxiaux l'un à l'autre, selon lequel
a) les éléments formant barreau (4, 125, 126) constitués chacun d'au moins un segment d'un matériau tiré de végétaux de grande taille, sont mis à disposition, ainsi que
b) les éléments de jonction (1, 14, 21, 34, 38, 52) constitués d'un matériau solide, à dilatation ultérieure, et selon lequel
c) au moins une extrémité d'un élément formant barreau (4, 125, 126), un élément de jonction (1, 14, 21, 34, 38, 52) devant être joint à celle-ci et/ou l'extrémité d'un autre élément formant barreau (4, 125, 126) à adjoindre, sont usinés de telle manière qu'il ou elle (ils ou elles) présente(nt) des surfaces se développant, au moins par zones, le long de corps géométriques bien défmis,
**caractérisé**
d) **en ce que**, lors de l'usinage, sont produites, dans la région de la jonction d'un élément formant barreau (4, 125, 126) avec un élément de jonction ou un autre élément formant barreau (1, 14, 21, 34, 38; 4, 125, 126), sur chacun des deux corps (4, 125, 126; 1, 14, 21, 34, 38, 52), une surface (11; 76) se développant, au moins par zones, le long de la surface d'enveloppe d'un cylindre, d'un cône, d'un prisme ou d'une pyramide, ainsi qu'une surface (11; 75) se développant, au moins par zones, le long d'un cylindre creux, d'un cône creux, d'un prisme creux et/ou d'une pyramide creuse,
e) et **en ce que** les surfaces (11; 75), usinées de cette façon, sont assemblées selon le principe de l'enfichage, avec des surfaces situées à proximité l'une de l'autre, qui sont complémentaires l'une de l'autre et sont adaptées pour un blocage par coincement et/ou collage à la manière d'un ajustement serré.

7. Procédé selon la revendication 6, **caractérisé en ce que** les corps et/ou les surfaces des pièces (4, 125, 126; 1, 14, 21, 34, 38, 52) devant être jointes les unes aux autres, sont usinés par retrait de matière, en particulier par enlèvement de copeaux.

8. Procédé selon la revendication 6 ou 7, **caractérisé en ce que** les deux extrémités (73) d'un élément formant barreau (4, 125, 126) sont usinées de telle manière que les axes de symétrie (axes longitudinaux) des parties usinées (75, 76) soient dans l'alignement l'un de l'autre.

9. Dispositif pour la réalisation d'une ossature porteuse ou d'une ossature en barreaux assemblés (5) à partir d'éléments formant barreau (4, 125, 126) joints ou pouvant être joints les uns aux autres et d'éléments de jonction disposés ou pouvant être disposés entre ces éléments formant barreau, dans la région de tous les emplacements de jonction où se rencontrent deux ou plus de deux éléments formant barreau dont les axes longitudinaux ne sont pas coaxiaux l'un à l'autre,
a) les éléments formant barreau (4, 125, 126) étant chacun constitués d'au moins un segment d'un matériau tiré de végétaux de grande taille, et
b) les éléments de jonction (1, 14, 21, 34, 38, 52) étant constitués d'un matériau solide, à dilatation ultérieure,
c) moyennant l'usinage d'au moins un élément de jonction (1, 14, 21, 34, 38, 52) et/ou des extrémités (73) d'éléments formant barreau (4, 125, 126) devant être joints à celui-ci ou les uns aux autres, de telle manière qu'il lui (leur) soit conféré des surfaces (10, 11; 75, 76) se développant, au moins par zones, le long de corps géométriques bien définis,
**caractérisé par**
d) au moins un outil (56, 113) conçu sous forme d'un outil d'enlèvement de matière, en particulier d'un outil de coupe, destiné à usiner au moins un élément de jonction (1, 14, 21, 34, 38, 52) et/ou les extrémités d'éléments formant barreau (4, 125, 126) devant être joints à celui-ci ou les uns aux autres, de telle manière que sur le corps usiné (4, 125, 126; 1, 14, 21, 34, 38, 52), il soit formé simultanément, dans la région de la jonction d'un élément formant barreau (4, 125, 126) avec un élément de jonction (1, 14, 21, 34, 38), une surface (11; 76) se développant, au moins par zones, le long de la surface d'enveloppe d'un cylindre, d'un cône, d'un prisme ou d'une pyramide, ainsi qu'une surface (11; 75) se développant, au moins par zones, le long d'un cylindre creux, d'un cône creux, d'un prisme creux et/ou d'une pyramide creuse,
e) qui permettent un assemblage, selon le principe de l'enfichage, avec des surfaces situées à proximité l'une de l'autre, qui sont complémentaires l'une de l'autre et sont adaptées pour un blocage par coincement et/ou collage à la manière d'un ajustement serré.

10. Dispositif selon la revendication 9, comprenant au moins un outil (113) pour l'usinage des extrémités (73) d'un élément formant barreau (4, 125, 126), **caractérisé par** un dispositif (84) destiné à positionner par serrage un élément formant barreau (4, 125, 126) de telle manière que ses deux extrémités (73) soient orientées le plus possible parallèlement ou concentriquement à un axe longitudinal du dispositif d'usinage (74).

11. Dispositif selon la revendication 10, **caractérisé par** une monture (108) respective et/ou un dispositif de fixation respectif, pour un outil d'usinage (113) respectif, à chaque extrémité du dispositif de serrage (84).

12. Dispositif selon l'une des revendications 9 à 11, **caractérisé par** un dispositif (111) destiné à guider les outils d'usinage (113) ou leurs montures (108) et/ou fixations, dans la direction d'avancement suivant l'axe longitudinal du dispositif d'usinage (74).
